# EUROPEAN PATENT SPECIFICATION

(11) **EP 3 406 617 B1**
(45) Date of publication and mention of the grant of the patent: **24.03.2021**
(21) Application number: 17172566.6
(22) Date of filing: 23.05.2017
(51) Int. Cl.: C07F 9/53

(54) **USE OF PHOSPHINE OXIDE COMPOUNDS IN A SEMICONDUCTING LAYER COMPRISED IN AN ELECTRONIC DEVICE**
VERWENDUNG VON PHOSPHINOXIDVERBINDUNGEN IN EINER HALBLEITENDEN SCHICHT IN EINER ELEKTRONISCHEN VORRICHTUNG
UTILISATION DE COMPOSÉS D'OXYDE DE PHOSPHINE DANS UNE COUCHE SEMI-CONDUCTRICE COMPRISE DANS UN DISPOSITIF ÉLECTRONIQUE

(43) Date of publication of application: 28.11.2018
(73) Proprietor: Novaled GmbH, 01099 Dresden (DE)
(72) Inventor: LUSCHTINETZ, Regina, 01307 Dresden (DE); CARDINALI, Francois, 01307 Dresden (DE); JANKUS, Vygintas, 01307 Dresden (DE); PAVICIC, Domagoj, 01307 Dresden (DE); ROTHE, Carsten, 01307 Dresden (DE); SENKOVSKYY, Volodymyr, 01307 Dresden (DE); DENKER, Ulrich, 01307 Dresden (DE)
(74) Representative: Bittner, Thomas L.

(56) References cited:
- EP-A1- 2 860 782
- EP-A1- 3 171 418
- JP-A- 2016 219 487
- US-A1- 2016 163 992

## Description

The present invention relates to the use of phosphine oxide compounds in a semiconducting layer comprised in an electronic device, a respective semiconducting layer, a respective electronic device and respective compounds.

Organic light-emitting diodes (OLEDs), which are self-emitting devices, have a wide viewing angle, excellent contrast, quick response, high brightness, excellent driving voltage characteristics, and color reproduction. A typical OLED includes an anode, a hole transport layer (HTL), an emission layer (EML), an electron transport layer (ETL), and a cathode, which are sequentially stacked on a substrate. In this regard, the HTL, the EML, and the ETL are thin films formed from organic and / or organometallic compounds.

When a voltage is applied to the anode and the cathode, holes injected from the anode electrode move to the EML, via the HTL, and electrons injected from the cathode electrode move to the EML, via the ETL. The holes and electrons recombine in the EML to generate excitons. When the excitons drop from an excited state to a ground state, light is emitted. The injection and flow of holes and electrons should be balanced, so that an OLED having the above-described structure has excellent efficiency.

JP 2009 203203 discloses an anthracene derivative which is useful as a material for an organic EL element, can be formed into a film by vapor deposition and by coating, and exhibits a high glass transition temperature. Provided is 9,10-bisphenylanthracene derivative having at least one aromatic heterocyclic group represented by general formula [3], 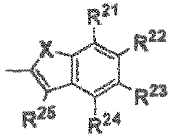 as a substituent of a phenyl group and an anthracenylene group. (In the formula, R²¹ to R²⁴ are each a hydrogen atom or a substituent; R²⁵ a hydrogen atom; X is O, S or an N-R²⁶ and R²⁶ is a hydrogen atom or a substituent).

WO2015/052284 discloses a semiconducting material comprising a phosphine oxide matrix and a metal salt.

WO2016/162440 likewise discloses semiconducting materials comprising phosphine oxide matrix compounds, such as the below compound B2, and metal salts.

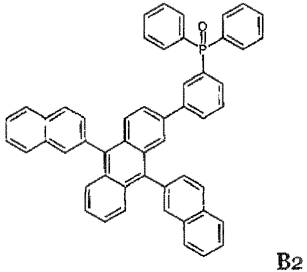

EP 2 860 782 A1 discloses semiconducting materials comprising a phosphine oxide matrix and a metal salt.

JP 2016219487 A discloses an organic electroluminescent element, a display device, an illuminating device, an organic electroluminescent element material and a novel compound.

US 2016/163992 A1 discloses an organic light emitting device and a display device having the same. EP3171418 -which is a late document_ discloses similar compounds which have been disclaimed.

However, there is a continuous need to improve the performance of OLEDs, in particular matrix compounds in an electron transport layer, electron injection layer and n-type charge injection layer which enable high efficiency, low operating voltage, and excellent stability.

Therefore, it is the object of the present invention to provide organic electroluminescent devices and novel compounds for use therein overcoming drawbacks of the prior art, in particular featuring reduced operating voltage and/or improved external quantum efficiency (EQE) and/or improved lifetime in OLEDs, in particular in fluorescent blue devices.

The above object is achieved by the subject-matter of the independent claims. Preferred embodiments result from the sub-claims.

This object is achieved by the use of a compound represented by the general formula (I) 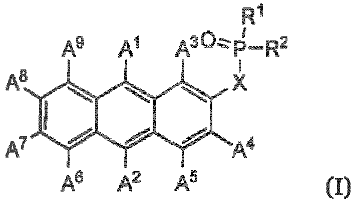 wherein A¹ and A² are independently selected from C₁ to C₆₀ carbon-containing groups; A³ to A⁹ are independently selected from hydrogen, C₁ to C₆₀ carbon-containing groups, or halogen; R¹ and R² are independently selected from C₁ to C₆₀ carbon-containing groups which are attached to the phosphorous atom by a sp³-hybridized carbon atom; X is a single covalent bond or a spacer group consisting of 1 to 120 covalently bound atoms; in a semiconducting layer comprised in an electronic device, provided that compounds having one of the following formulas 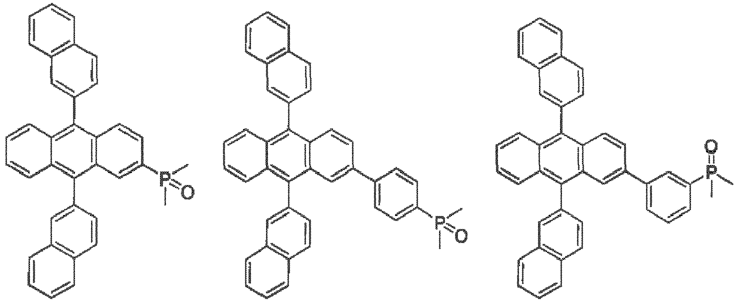 are excluded.

The term "carbon-containing group" as used herein shall be understood to encompass any organic group comprising carbon atoms, in particular organic groups, such as alkyl, aryl, heteroaryl, heteroalkyl, in particular such groups which are substituents usual in organic electronics, such as hydrocarbyl, cyano, hydrocarbyloxy, diarylamino, bis(heteroaryl)amino, heteroaryl etc..

In one embodiment A¹ and A² are independently selected from a hydrocarbyl, preferably from a C₁-C₄₂ hydrocarbyl. In one embodiment A¹ and A² are independently selected from aryl or heteroaryl. In one embodiment, the aryl is a C₆-C₄₂ aryl and/or the heteroaryl is a C₂-C₄₂ heteroaryl. In one embodiment, the heteroaryl comprises heteroatoms selected from O, N and S.

In one embodiment, the heteroaryl consists of five- and/or six-membered aromatic rings. In one embodiment, one aromatic ring in the heteroaryl comprises up to three heteroatoms.

In a further embodiment A¹ and A² are independently selected from the group consisting of phenyl, biphenylyl, and naphthyl.

In another embodiment A³ to A⁹ are independently selected from the group consisting of hydrogen, hydrocarbyl, halogen, cyano, hydroxycarbyloxy, diarylamino, bis(heteroaryl)amino, or heteroaryl. In one embodiment, carbon-containing groups A³ to A⁹ are selected from groups containg 1-42 carbon atoms.

In another embodiment A³ to A⁹ are independently selected from aryl and heteroaryl. In one embodiment, the aryl is a C₆-C₄₂ aryl and/or the heteroaryl is a C₂-C₄₂ heteroaryl. In one embodiment, the heteroaryl comprises heteroatoms selected from O, N and S.

In one embodiment, the heteroaryl consists of five- and/or six-membered aromatic rings. In one embodiment, one aromatic ring in the heteroaryl comprises up to three heteroatoms.

In a further embodiment A³ to A⁹ are hydrogen.

In one embodiment R¹ and R² are independently selected from C₁ to C₁₆ alkyl.

In another embodiment R¹ and R² are methyl.

In a further embodiment the spacer group is arylene or heteroarylene.

In another embodiment the spacer group is phenylene or oligophenylene.

Under oligophenylene, it is to be understood a divalent hydrocarbon group formed by linking 2-20 phenylene structural units. Phenylene structural units may be independently selected from ortho-, meta- and para-phenylene. Examples of oligophenylenes consisting of two phenylene structural units are: 1,1'-biphenyl-4,4'-diyl; 1,1'-biphenyl-4,3'-diyl; 1,1'-biphenyl-4,2'-diyl; 1,1'-biphenyl-3,3'-diyl; 1,1'-biphenyl-3,2'-diyl; 1,1'-biphenyl-2,2'-diyl.

In one embodiment the compound is selected from one or more of the structures

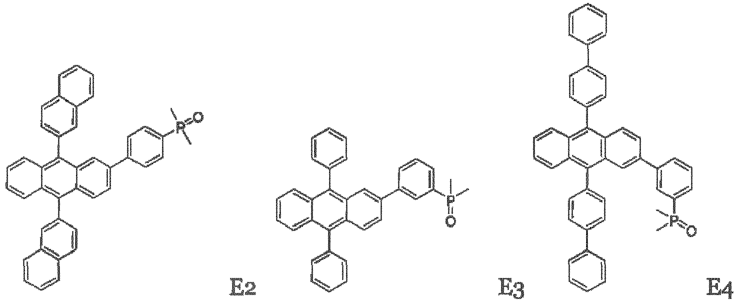

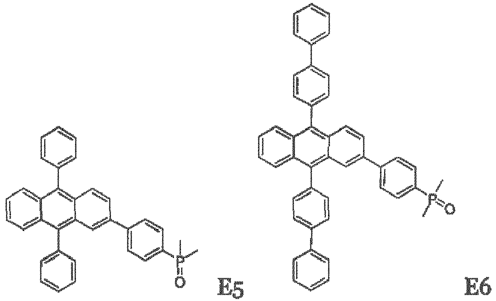

In a further embodiment the electronic device is an organic light emitting diode.

In another embodiment the organic light emitting diode is a blue organic light emitting diode.

The above object is further achieved by a semiconducting material comprising a compound represented by the general formula (I) 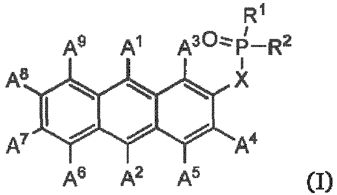 wherein A¹ and A² are independently selected from C₁ to C₆₀ carbon-containing groups; A³ to A⁹ are independently selected from hydrogen, C₁ to C₆₀ carbon-containing groups, or halogen; R¹ and R² are independently selected from C₁ to C₆₀ carbon-containing groups which are attached to the phosphorous atom by a sp³-hybridized carbon atom; X is a single covalent bond of a spacer group consisting of 1 to 120 covalently bound atoms.

In one embodiment A¹ and A² are independently selected from a hydrocarbyl, preferably from a C₁-C₄₂ hydrocarbyl. In one embodiment A¹ and A² are independently aryl or heteroaryl. In one embodiment, the aryl is a C₆-C₄₂ aryl and/or the heteroaryl is a C₂-C₄₂ heteroaryl. In one embodiment, the heteroaryl comprises heteroatoms selected from O, N and S.

In one embodiment, the heteroaryl consists of five- and/or six-membered aromatic rings. In one embodiment, one aromatic ring in the heteroaryl comprises up to three heteroatoms.

In a further embodiment A¹ and A² are independently selected from the group consisting of phenyl, biphenylyl, and naphthyl.

In another embodiment A³ to A⁹ are independently selected from the group consisting of hydrogen, hydrocarbyl, halogen, cyano, hydroxycarbyloxy, diarylamino, bis(heteroaryl)amino, or heteroaryl. In one embodiment, carbon-containing groups A³ to A⁹ are selected from groups containg 1-42 carbon atoms.

In another embodiment A³ to A⁹ are independently selected from aryl and heteroaryl. In one embodiment, the aryl is a C₆-C₄₂ aryl and/or the heteroaryl is a C₂-C₄₂ heteroaryl. In one embodiment, the heteroaryl comprises heteroatoms selected from O, N and S.

In one embodiment, the heteroaryl consists of five- and/or six-membered aromatic rings. In one embodiment, one aromatic ring in the heteroaryl comprises up to three heteroatoms.

In a further embodiment A³ to A⁹ are hydrogen.

In one embodiment R¹ and R² are independently selected from C₁ to C₁₆ alkyl.

In another embodiment R¹ and R² are methyl.

In a further embodiment the spacer group is arylene or heteroarylene.

In another embodiment the spacer group is phenylene or oligophenylene.

In one embodiment the compound is selected from one or more of the above structures E1-E6.

Furthermore, the object is achieved by an electronic device comprising the inventive semiconducting material.

In a further embodiment the electronic device is an organic light emitting diode.

In another embodiment the organic light emitting diode is a blue organic light emitting diode.

Regarding the inventive use, the inventive semiconducting material and the inventive electronic device, it might be provided that compounds having the following formulas 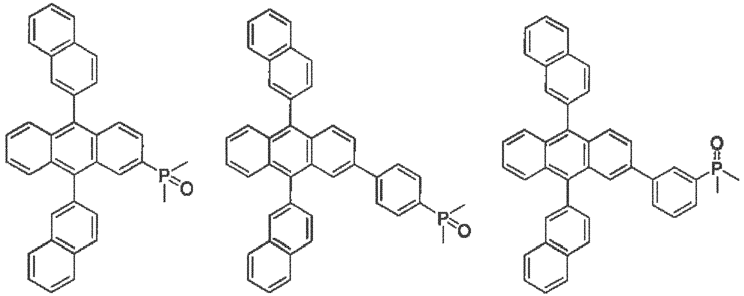 are excluded.

Finally, the above object is achieved by a compound according to formula (II) 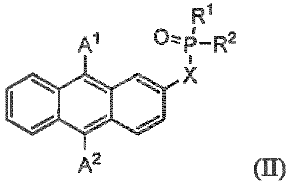 wherein, A¹ and A² are independently selected from C₁ to C₆₀ carbon-containing groups; R¹ and R² are independently selected from C₁ to C₆₀ carbon-containing groups which are attached to the phosphorous atom by a sp³-hybridized carbon atoms; X is a single covalent bond or a spacer group consisting of 1 to 120 covalently bound atoms; provided that compounds having one of the following formulas 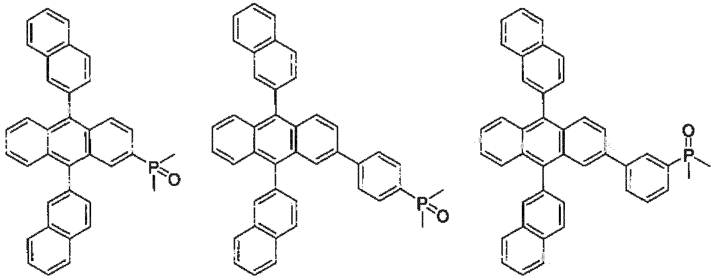 are excluded.

In one embodiment A¹ and A² are independently selected from a hydrocarbyl, preferably from a C₁-C₄₂ hydrocarbyl. In one embodiment A¹ and A² are independently selected from aryl or heteroaryl. In one embodiment, the aryl is a C₆-C₄₂ aryl and/or the heteroaryl is a C₂-C₄₂ heteroaryl. In one embodiment, the heteroaryl comprises heteroatoms selected from O, N and S.

In one embodiment, the heteroaryl consists of five- and/or six-membered aromatic rings. In one embodiment, one aromatic ring in the heteroaryl comprises up to three heteroatoms.

In a further embodiment A¹ and A² are independently selected from the group consisting of phenyl, biphenylyl, and naphthyl.

In one embodiment R¹ and R² are independently selected from C₁ to C₁₆ alkyl.

In another embodiment R¹ and R² are methyl.

In a further embodiment the spacer group is arylene or heteroarylene.

In another embodiment the spacer group is phenylene or oligophenylene.

In a further embodiment, the compound is selected from one or more of the above structures E3-E6.

Surprisingly, it was found by the inventors that the above compounds are superior over that of the prior art by being suitable to improve - if being used as in a semiconducting layer in an of an electronic device such as an OLED - the performance thereof, in particular to result in high efficiency and low operating voltage of an OLED.

The term "alkyl" as used herein shall encompass linear as well as branched and cyclic alkyl. For example, C₃-alkyl may be selected from n-propyl and isopropyl. Likewise, C₄-alkyl encompasses n-butyl, sec-butyl and t-butyl. Likewise, C₆-alkyl encompasses n-hexyl and cyclohexyl.

The subscribed number n in Cₙ relates to the total number of carbon atoms in the respective alkyl, arylene, heteroarylene or aryl group.

The term "aryl" as used herein shall encompass phenyl (C₆-aryl), fused aromatics, such as naphthalene, anthracene, phenanthracene, tetracene etc. Further encompassed are biphenyl and oligo- or polyphenyls, such as terphenyl etc. Further encompassed shall be any further aromatic hydrocarbon substituents, such as fluorenyl etc. Arylene, respectively heteroarylene refers to groups to which two further moieties are attached.

The term "heteroaryl" as used herein refers to aryl groups in which at least one carbon atom is substituted by a heteroatom, preferably selected from N, O, S, B or Si.

The subscripted number n in Cₙ-heteroaryl merely refers to the number of carbon atoms ex-cluding the number of heteroatoms. In this context, it is clear that a C₃ heteroarylene group is an aromatic compound comprising three carbon atoms, such as pyrazol, imidazole, oxazole, thiazole and the like.

With respect to the inventive organic semiconductive layer as well as with respect to the inventive compound, the compound mentioned in the experimental part (Tables related to "starting materials and products") are most preferred.

Depending on the intended purpose, the inventive organic semiconductive layer may be doped. In a preferred embodiment, the organic semiconductive layer is doped, preferably electrically doped. It is further preferred that doping is n-doping in this regard. Best results were achieved by the following groups of dopants.

In one embodiment, the organic semiconductive layer comprises alkali organic complex and/or an alkali halide as the dopant.

Preferably, the alkali organic complex and/or alkali halide are a lithium organic complex and/or lithium halide.

Suitable organic ligands to form a lithium organic complex that can be used for the electron transport layer are disclosed, for example, in US 2014/0048792 and Kathirgamanathan, Poopathy; Arkley, Vincent; Surendrakumar, Sivagnanasundram; Chan, Yun F.; Ravichandran, Seenivasagam; Ganeshamurugan, Subramaniam; Kumaraverl, Muttulingam; Antipan-Lara, Juan; Paramaswara, Gnanamolly; Reddy, Vanga R., Digest of Technical Papers - Society for Information Display International Symposium (2010), 41(Bk. 1), 465-468.

Particularly preferred lithium organic complexes are shown in Table 1.

**Table 1**

| Lithium organic complex that can be suitable used in the organic semiconductive layer | | | |
|---|---|---|---|
| Compound | Name | Structure | Publication |
| LiQ | lithium 8-hydroxyquinolate | 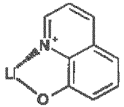 | WO 2013079217 A1 |
| Li-1 | lithium tetra(1H-pyrazol-1-yl)borate | 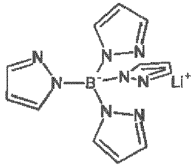 | WO 2013079676 A1 |
| Li-2 | lithium 2-(diphenylphosphoryl)phenolate | 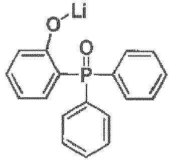 | WO 2013079678A1 |
| Li-3 | lithium 2-(pyridin-2-yl)phenolate | 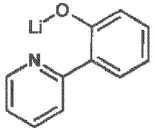 | JP 2008195623 |
| Li-4 | lithium 2-(1-phenyl-1H-benzo[d]imidazol-2-yl)phenolate | 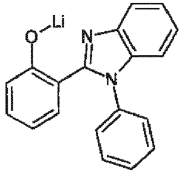 | JP 2001291593, |
| Li-5 | lithium 2-(benzo[d]oxazol-2-yl)phenolate | 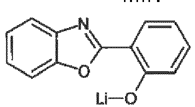 | US 20030165711 |
| Li-6 | lithium 2-(diphenylphosphoryl)pyridin-3-olate | 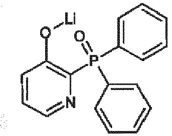 | EP 2724388 |

The organic ligand of the lithium organic complex of the organic semiconductive layer may be selected from the group comprising a quinolate, a borate, a phenolate, a pyridinolate or a Schiff base ligand, or Table 1;
- preferably the lithium quinolate complex has the formula III, IV, or V: 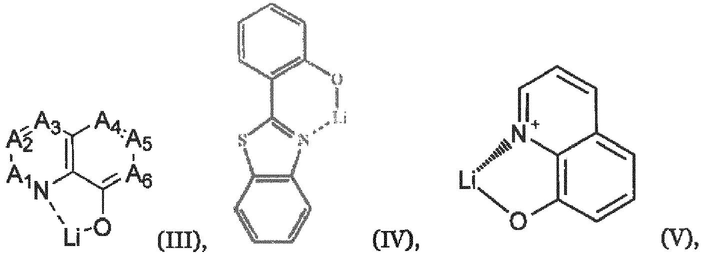 wherein
   A₁ to A₆ are same or independently selected from CH, CR, N, O;
   R is same or independently selected from hydrogen, halogen, alkyl or aryl or heteroaryl with 1 to 20 carbon atoms; and more preferred A₁ to A₆ are CH;
- preferably the borate based organic ligand is a tetra(1H-pyrazol-1-yl)borate;
- preferably the phenolate is a 2-(pyridin-2-yl)phenolate or a 2-(diphenylphosphoryl)phenolate;
- preferably the lithium Schiff base has the structure 100, 101, 102 or 103: 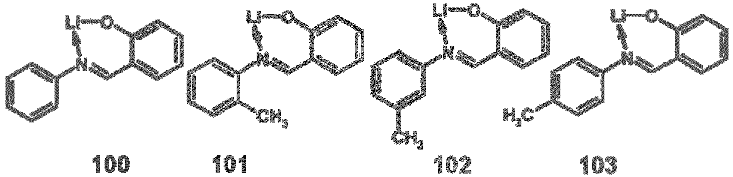
- more preferred the lithium organic complex is selected from a compound of Table 1.

The lithium halide of the organic semiconductive layer may be selected from the group comprising a LiF, LiCl, LiBr or LiJ, and preferably LiF.

When the organic semiconductive layer comprising a compound of formula (I) is an electron transport layer or electron injection layer and further comprises a dopant selected from a lithium organic complex and/or of a lithium halide, particularly low operating voltage and high efficiency and lifetime are obtained.

It is also preferred that the organic semiconductive layer comprises a zero-valent metal dopant, wherein the zero-valent metal dopant is a metal in its elemental state. The term elemental state should be understood in this regard in terms of electronic states and their energies and in terms of chemical bonds of comprised metal atoms, closer to the form of an elemental metal, of a free metal atom or to the form of a cluster of metal atoms, than to the form of a metal salt, of an organometallic metal compound, or to the form of another compound comprising a covalent bond between metal and non-metal, or to the form of a coordination compound of a metal. It is assumed that a doped material prepared by co-deposition of vapour of an organic matrix and vapour of a neat metal or of a metal alloy comprises necessarily at least part of the deposited metal in its elemental state.

The zero-valent metal dopant is selected from alkali metals, alkaline earth metals, rare earth metals and/or group 3 transition metals. Preferably, the zero-valent metal dopant is selected from the group consisting of Li, Na, K, Rb, Cs, Mg, Ca, Sr, Ba, Yb, Sm, Eu, Nd, Tb, Gd, Ce, La, Sc and Y, more preferred the zero-valent metal dopant is selected from the group consisting of Li, Na, Mg, Ca, Ba, Yb, and even more preferred the zero-valent metal dopant is selected from the group consisting of Li, Mg, Ba, Yb.

When the organic semiconducting layer comprising a compound of formula (I) is an electron injection layer and/or n-type charge generation layer and further comprises a dopant selected from a zero-valent metal dopant, particularly low operating voltage and high efficiency and lifetime are obtained. For alternative purposes, it may be preferred that the organic semiconductive layer is free of a dopant and consists of the at least one compound of formula (I). This is particularly true, if no dopant is necessary to be present in the inventive layer for operating the same. In particular, the semiconductive organic layer may be free of an alkali organic complex and/or halide and/or zero-valent metal.

In an embodiment, the organic semiconducting layer is located between the anode and the cathode. Preferably, the layer is located closer to the cathode than to the anode. Preferably, the layer is adjacent to the cathode. Also preferred, the organic semiconducting layer is arranged between the emission layer and the cathode. If a hole blocking layer is present, the organic semiconducting layer is arranged between the hole blocking layer and the cathode.

In an embodiment, the organic semiconducting layer is an electron transport layer. Preferably, the layer is adjacent to a cathode or an electron injection layer, if present. In another aspect, the organic semiconducting layer is the electron transport layer and the layer is arranged adjacent to a charge generation layer.

In another embodiment, the organic semiconducting layer is an electron injection layer. Preferably, the layer is arranged between a cathode and an electron transport layer.

More preferred, the organic semiconducting layer is an electron transport layer and/or an electron injection layer.

In an embodiment, the organic semiconducting layer is an n-type charge generation layer (CGL). The n-type CGL is arranged between the anode and cathode. If at least one emission layer is present, the n-type CGL is arranged between the first and second emission layer. Preferably, the n-type CGL is adjacent to an emission layer and/or p-type CGL. More preferred, the n-type CGL is arranged between an emission layer and a p-type CGL.

In another aspect, the organic semiconducting layer is not an anode layer or a cathode layer. If not discussed otherwise, the terms anode (cathode), anode (cathode) layer and anode (cathode) electrode are used synonymously herein.

In another aspect, the organic semiconducting layer is not an emission layer. Preferably, the organic semiconducting layer is free of emitter.

In a preferred embodiment, the organic semiconducting layer is in direct contact with the emission layer.

In another aspect, the organic semiconducting layer is in direct contact with the cathode.

In another aspect, the organic semiconducting layer is arranged between the emission layer and an electron injection layer and is in direct contact with both layers.

In another aspect, the organic semiconducting layer is arranged between the emission layer and an n-type CGL and is in direct contact with both layers. In another aspect, the organic semiconducting layer is arranged between an electron transport layer and a p-type CGL and is in direct contact with both layers.

In another aspect, the organic semiconducting layer is arranged between the emission layer and a p-type CGL and is in direct contact with both layers.

In another aspect, the organic semiconducting layer is arranged between the emission layer and the cathode layer and is in direct contact with both layers.

In another aspect, the organic semiconducting layer is arranged between an electron transport layer and the cathode layer and is in direct contact with both layers.

The organic electroluminescent device (OLED) may be a bottom- or top-emission device.

According to another aspect, the organic electroluminescent device according to the present invention may comprise more than one emission layer, preferably two or three emission layers. An OLED comprising more than one emission layer is also described as a tandem OLED or stacked OLED.

Another aspect is directed to a device comprising at least one organic electroluminescent device (OLED). A device comprising organic light-emitting diodes is for example a display or a lighting panel.

In the present invention, the following defined terms, these definitions shall be applied, unless a different definition is given in the claims or elsewhere in this specification.

In the context of the present specification the term "different" or "differs" in connection with the matrix material means that the matrix material differs in their structural formula.

In the context of the present specification the term "different" or "differs" in connection with the lithium compound means that the lithium compound differs in their structural formula.

The external quantum efficiency, also named EQE, is measured in percent (%).

The lifetime, also named LT, between starting brightness and 97 % of the original brightness is measured in hours (h).

The operating voltage, also named V, is measured in Volt (V) at 10 milliAmpere per square centimeter (mA/cm²).

The color space is described by coordinates CIE-x and CIE-y (International Commission on Illumination 1931). For blue emission the CIE-y is of particular importance. A smaller CIE-y denotes a deeper blue color.

The highest occupied molecular orbital, also named HOMO, and lowest unoccupied molecular orbital, also named LUMO, are measured in electron volt (eV).

The terms "OLED" and "organic light-emitting diode" are simultaneously used and have the same meaning. The term "organic electroluminescent device" as used herein may comprise both organic light emitting diodes as well as organic light emitting transistors (OLETs).

The term "electron transport layer stack" as used in the specification comprises at least two electron transport layers or at least three electron transport layers.

The term "different compound" as used in connection with the matrix compound means that the matrix compound differs from the other matrix compound in its chemical formula.

As used herein, "weight percent", "wt.-90", "percent by weight", "% by weight", and varia-tions thereof refer to a composition, component, substance or agent as the weight of that component, substance or agent of the respective electron transport layer divided by the total weight of the respective electron transport layer thereof and multiplied by 100. It is under-stood that the total weight percent amount of all components, substances and agents of the respective electron transport layer and electron injection layer are selected such that it does not exceed 100 wt.-%.

As used herein, "volume percent", "vol.-%", "percent by volume", "% by volume", and variations thereof refer to a composition, component, substance or agent as the volume of that component, substance or agent of the respective electron transport layer divided by the total volume of the respective electron transport layer thereof and multiplied by 100. It is understood that the total volume percent amount of all components, substances and agents of the cathode layer are selected such that it does not exceed 100 vol.-%.

All numeric values are herein assumed to be modified by the term "about", whether or not explicitly indicated. As used herein, the term "about" refers to variation in the numerical quantity that can occur. Whether or not modified by the term "about" the claims include equivalents to the quantities.

It should be noted that, as used in this specification and the appended claims, the singular forms "a", "an", and "the" include plural referents unless the content clearly dictates other-wise.

The term "free of", "does not contain", "does not comprise" does not exclude impurities. Impurities have no technical effect with respect to the object achieved by the present invention.

In the context that the electron transport layer is free of a zero-valent metal dopant, alkali halide, alkali organic complex and/or emitter, the term "free of" means that the so called "free of" electron transport layer may comprise of about 5 wt.-% or less of a zero-valent metal dopant, alkali halide, alkali organic complex and/or emitter, preferably about 0.5 wt.-% or less, and more preferably about 0.05 wt.-% or less, and even more preferably about 0.005 wt.-% or less of a zero-valent metal dopant, alkali halide, alkali organic complex and/or emitter and most preferred is free of a zero-valent metal dopant, alkali halide, alkali organic complex and/or emitter.

### Substrate

The substrate may be any substrate that is commonly used in manufacturing of organic light-emitting diodes. If light is emitted through the substrate, the substrate may be a transparent material, for example a glass substrate or a transparent plastic substrate, having excellent mechanical strength, thermal stability, transparency, surface smoothness, ease of handling, and waterproofness. If light is emitted through the top surface, the substrate may be a transparent or non-transparent material, for example a glass substrate, a plastic substrate, a metal substrate or a silicon substrate.

### Anode electrode

The anode electrode may be formed by depositing or sputtering a compound that is used to form the anode electrode. The compound used to form the anode electrode may be a high work-function compound, so as to facilitate hole injection. The anode material may also be selected from a low work function material (i.e. Aluminum). The anode electrode may be a transparent or reflective electrode. Transparent conductive compounds, such as indium tin oxide (ITO), indium zinc oxide (IZO), tin-dioxide (SnO2), and zinc oxide (ZnO), may be used to form the anode electrode 120. The anode electrode 120 may also be formed using magnesium (Mg), aluminum (Al), aluminum-lithium (Al-Li), calcium (Ca), magnesium-indium (Mg-In), magnesium-silver (Mg-Ag), silver (Ag), gold (Au), or the like.

### Hole injection layer

The hole injection layer (HIL) 130 may be formed on the anode electrode 120 by vacuum deposition, spin coating, printing, casting, slot-die coating, Langmuir-Blodgett (LB) deposi-tion, or the like. When the HIL 130 is formed using vacuum deposition, the deposition conditions may vary according to the compound that is used to form the HIL 130, and the desired structure and thermal properties of the HIL 130. In general, however, conditions for vacuum deposition may include a deposition temperature of 100° C to 500° C, a pressure of 10⁻⁸ to 10⁻³ Torr (1 Torr equals 133.322 Pa), and a deposition rate of 0.1 to 10 nm/sec.

When the HIL 130 is formed using spin coating, printing, coating conditions may vary ac-cording to a compound that is used to form the HIL 130, and the desired structure and thermal properties of the HIL 130. For example, the coating conditions may include a coating speed of about 2000 rpm to about 5000 rpm, and a thermal treatment temperature of about 80° C to about 200° C. Thermal treatment removes a solvent after the coating is performed.

The HIL 130 may be formed of any compound that is commonly used to form an HIL. Examples of compounds that may be used to form the HIL 130 include a phthalocyanine compound, such as copper phthalocyanine (CuPc), 4,4',4"-tris (3-methylphenylphenylamino) triphenylamine (m-MTDATA), TDATA, 2T-NATA, polyaniline/dodecylbenzenesulfonic acid (PANI/DBSA), poly(3,4-ethylenedioxythiophene)/poly(4-styrenesulfonate) (PEDOT/PSS), polyaniline/camphor sulfonic acid (PANI/CSA), and polyaniline)/poly(4-styrenesulfonate (PANI/PSS).

The HIL 130 may be a pure layer of p-dopant or may be selected from a hole-transporting matrix compound doped with a p-dopant. Typical examples of known redox doped hole transport materials are: copper phthalocyanine (CuPc), which HOMO level is approximately -5.2 eV, doped with tetrafluoro-tetracyanoquinonedimethane (F4TCNQ), which LUMO level is about -5.2 eV; zinc phthalocyanine (ZnPc) (HOMO = - 5.2 eV) doped with F4TCNQ; α-NPD (N,N'-Bis(naphthalen-1-yl)-N,N'-bis(phenyl)-benzidine) doped with F4TCNQ. α-NPD doped with 2,2'-(perfluoronaphthalen-2,6-diylidene) dimalononitrile (PD1). α-NPD doped with 2,2',2"-(cyclopropane-1,2,3-triylidene)tris(2-(p-cyanotetrafluorophenyl)acetonitrile) (PD2). Dopant concentrations can be selected from 1 to 20 wt.-%, more preferably from 3 wt.-% to 10 wt.-%.

The dopant PD-2 having formula 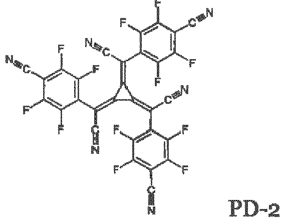 is one of the auxiliary materials used in examples below.

The thickness of the HIL 130 may be in the range of about 1 nm to about 100 nm, and for example, about 1 nm to about 25 nm. When the thickness of the HIL 130 is within this range, the HIL 130 may have excellent hole injecting characteristics, without a substantial increase in driving voltage.

### Hole transport layer

The hole transport layer (HTL) 140 may be formed on the HIL 130 by vacuum deposition, spin coating, slot-die coating, printing, casting, Langmuir-Blodgett (LB) deposition, or the like. When the HTL 140 is formed by vacuum deposition or spin coating, the conditions for deposition and coating may be similar to those for the formation of the HIL 130. However, the conditions for the vacuum or solution deposition may vary, according to the compound that is used to form the HTL 140.

The HTL 140 may be formed of any compound that is commonly used to form a HTL. Com-pound that can be suitably used is disclosed for example in Yasuhiko Shirota and Hiroshi Kageyama, Chem. Rev. 2007, 107, 953-1010 and incorporated by reference. Examples of the compound that may be used to form the HTL 140 are: a carbazole derivative, such as N-phenylcarbazole or polyvinylcarbazole; an amine derivative having an aromatic condensation ring, such as N,N'-bis(3-methylphenyl)-N,N'-diphenyl-[1,1-biphenyl]-4,4'-diamine (TPD), or N,N'-di(naphthalen-1-yl)-N,N'-diphenyl benzydine (alpha -NPD); and a triphenylamine-based compound, such as 4,4',4"-tris(N-carbazolyl)triphenylamine (TCTA). Among these compounds, TCTA can transport holes and inhibit excitons from being diffused into the EML.

The thickness of the HTL 140 may be in the range of about 5 nm to about 250 nm, preferably, about 10 nm to about 200 nm, further about 20 nm to about 190 nm, further about 40 nm to about 180 nm, further about 60 nm to about 170 nm, further about 80 nm to about 160 nm, further about 100 nm to about 160 nm, further about 120 nm to about 140 nm. A preferred thickness of the HTL 140 may be 170 nm to 200 nm.

When the thickness of the HTL 140 is within this range, the HTL 140 may have excellent hole transporting characteristics, without a substantial increase in driving voltage.

### Electron blocking layer

The function of the electron blocking layer (EBL) 145 is to prevent electrons from being transferred from the emission layer to the hole transport layer and thereby confine electrons to the emission layer. Thereby, efficiency, operating voltage and/or lifetime are improved. Typically, the electron blocking layer comprises a triarylamine compound. The triarylamine compound may have a LUMO level closer to vacuum level than the LUMO level of the hole transport layer. The electron blocking layer may have a HOMO level that is further away from vacuum level compared to the HOMO level of the hole transport layer. The thickness of the electron blocking layer is selected between 2 and 20 nm.

The electron blocking layer may comprise a compound of formula Z below (Z).

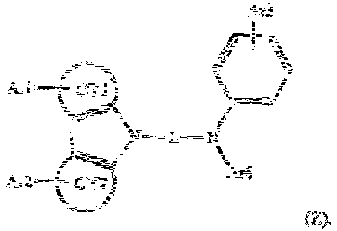

In Formula Z, CY1 and CY2 are the same as or different from each other, and each independently represent a benzene cycle or a naphthalene cycle, An to Ar3 are the same as or different from each other, and each independently selected from the group consisting of hydrogen; a substituted or unsubstituted aryl group having 6 to 30 carbon atoms; and a substituted or unsubstituted heteroaryl group having 5 to 30 carbon atoms, Ar4 is selected from the group consisting of a substituted or unsubstituted phenyl group, a substituted or unsubstituted biphenyl group, a substituted or unsubstituted terphenyl group, a substituted or unsubstituted triphenylene group, and a substituted or unsubstituted heteroaryl group having 5 to 30 carbon atoms, L is a substituted or unsubstituted arylene group having 6 to 30 carbon atoms.

If the electron blocking layer has a high triplet level, it may also be described as triplet control layer.

The function of the triplet control layer is to reduce quenching of triplets if a phosphorescent green or blue emission layer is used. Thereby, higher efficiency of light emission from a phosphorescent emission layer can be achieved. The triplet control layer is selected from triarylamine compounds with a triplet level above the triplet level of the phosphorescent emitter in the adjacent emission layer. Suitable triplet control layer, in particular the triarylamine compounds, are described in EP 2 722 908 A1.

### Emission layer (EML)

The EML 150 may be formed on the HTL by vacuum deposition, spin coating, slot-die coat-ing, printing, casting, LB, or the like. When the EML is formed using vacuum deposition or spin coating, the conditions for deposition and coating may be similar to those for the for-mation of the HIL. However, the conditions for deposition and coating may vary, according to the compound that is used to form the EML.

The emission layer (EML) may be formed of a combination of a host and a dopant. Example of the host are Alq3, 4,4'-N,N'-dicarbazole-biphenyl (CBP), poly(n-vinylcarbazole) (PVK), 9,10-di(naphthalene-2-yl)anthracene (ADN), 4,4',4"-Tris(carbazol-9-yl)-triphenylamine
(TCTA), 1,3,5-tris(N-phenylbenzimidazole-2-yl)benzene (TPBI), 3-tert-butyl-9,10-di-2-naphthylanthracenee (TBADN), distyrylarylene (DSA), Bis(2-(2-hydroxyphenyl)benzo-thiazolate)zinc (Zn(BTZ) 2), G3 below, AND, Compound 1 below, and Compound 2 below.

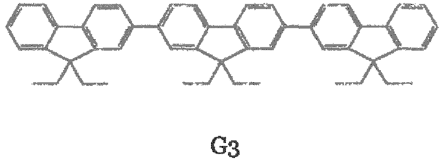

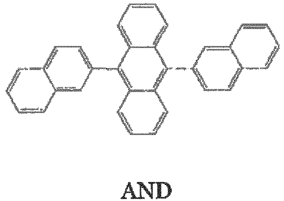

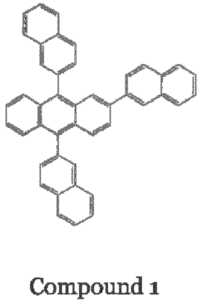

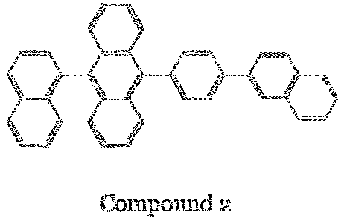

The dopant may be a phosphorescent or fluorescent emitter. Phosphorescent emitters and emitters which emit light via a thermally activated delayed fluorescence (TADF) mechanism are preferred due to their higher efficiency. The emitter may be a small molecule or a polymer.

Examples of a red dopant are PtOEP, Ir(piq)₃, and Btp₂Ir(acac), but are not limited thereto. These compounds are phosphorescent emitters, however, fluorescent red dopants could also be used.

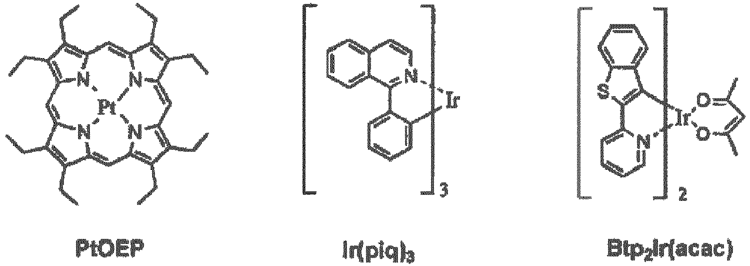

Examples of a phosphorescent green dopant are Ir(ppy)₃ (ppy = phenylpyridine), Ir(ppy)₂(acac), Ir(mpyp)₃ are shown below. Compound 3 is an example of a fluorescent green emitter and the structure is shown below.

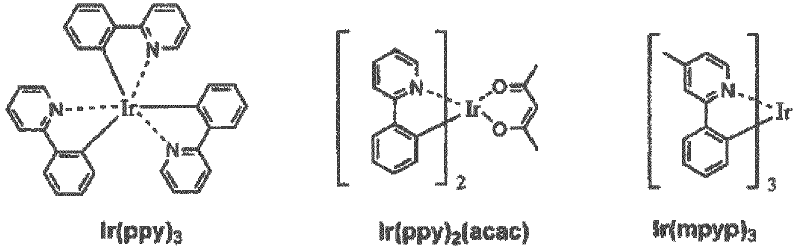

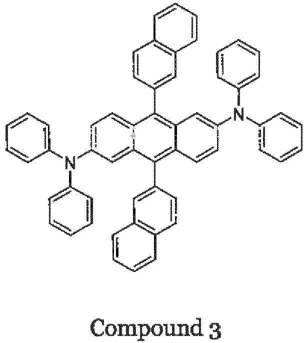

Examples of a phosphorescent blue dopant are F2Irpic, (F2ppy)2Ir(tmd) and Ir(dfppz)3, ter-fluorene, the structures are shown below. 4.4'-bis(4-diphenyl amiostyryl)biphenyl (DPAVBi), 2,5,8,11-tetra-tert-butyl perylene (TBPe), and Compound 4 below are examples of fluorescent blue dopants.

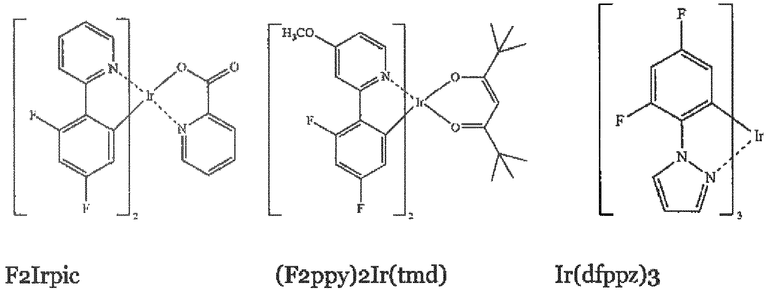

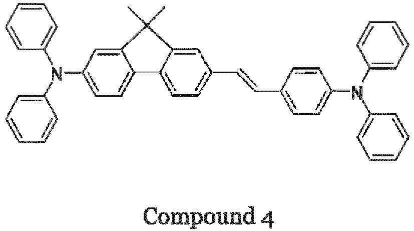

The amount of the dopant may be in the range of about 0.01 to about 50 parts by weight, based on 100 parts by weight of the host. Alternatively, the emission layer may consist of a light-emitting polymer. The EML may have a thickness of about 10 nm to about 100 nm, for example, about 20 nm to about 60 nm. When the thickness of the EML is within this range, the EML may have excellent light emission, without a substantial increase in driving voltage.

### Hole blocking layer (HBL)

When the EML comprises a phosphorescent dopant, a hole blocking layer (HBL) may be formed on the EML, by using vacuum deposition, spin coating, slot-die coating, printing, casting, LB deposition, or the like, in order to prevent the diffusion of triplet excitons or holes into the ETL.

When the HBL is formed using vacuum deposition or spin coating, the conditions for deposition and coating may be similar to those for the formation of the HIL. However, the conditions for deposition and coating may vary, according to the compound that is used to form the HBL. Any compound that is commonly used to form a HBL may be used. Examples of compounds for forming the HBL include an oxadiazole derivative, a triazole derivative, and a phenanthroline derivative.

The HBL may have a thickness of about 5 nm to about 100 nm, for example, about 10 nm to about 30 nm. When the thickness of the HBL is within this range, the HBL may have excel-lent hole-blocking properties, without a substantial increase in driving voltage.

### Compounds used in the electron transport layer (ETL)

The OLED according to the present invention may not contain an electron transport layer (ETL). However, the OLED according to the present invention may optional contain an electron transport layer (ETL).

According to various embodiments the OLED may comprises an electron transport layer or an electron transport layer stack comprising at least a first electron transport layer and at least a second electron transport layer.

According to various embodiments of the OLED of the present invention the electron transport layer may comprises at least one matrix compound. Preferably, the matrix com-pound is an organic compound. More preferred, the matrix compound is a covalent organic matrix compound. In other words, the matrix compound comprises covalent bonds. It is to be understood that "substantially covalent" means compounds comprising elements bound together mostly by covalent bonds.

According to various embodiments of the OLED the matrix compound may be selected from:
- an anthracene based compound or a heteroaryl substituted anthracene based compound, preferably 2-(4-(9,10-di(naphthalen-2-yl)anthracene-2-yl)phenyl)-1-phenyl-1H-benzo[d]imidazole and/or N4,N4"-di(naphthalen-1-yl)-N4,N4"-diphenyl-[1,1':4',1"-terphenyl]-4,4"-diamine;
- a phosphine oxide based compound, preferably (3-(dibenzo[c,h]acridin-7-yl)phenyl)diphenylphosphine oxide and/or phenyl bis(3-(pyren-1-yl)phenyl)phosphine oxide and/or 3-Phenyl-3H-benzo[b]dinaphtho[2,1-d:1',2'-f]phosphepine-3-oxide; or
- a substituted phenanthroline compound, preferably 2,4,7,9-tetraphenyl-1,10-phenanthroline, 4,7-diphenyl-2,9-di-p-tolyl-1,10-phenanthroline, or 2,9-di(biphenyl-4-yl)-4,7-diphenyl-1,10-phenanthroline.

According to various embodiments of the OLED the matrix compound of the electron transport layer may be preferably selected from:
- a phosphine oxide based compound, preferably (3-(dibenzo[c,h]acridin-7-yl)phenyl)diphenylphosphine oxide, 3-phenyl-3H-benzo[b]dinaphtho[2,1-d:1',2'-f]phosphepine-3-oxide and/or phenyl bis(3-(pyren-1-yl)phenyl)phosphine oxide; or
- a substituted phenanthroline compound, preferably 2,4,7,9-tetraphenyl-1,10-phenanthroline, 4,7-diphenyl-2,9-di-p-tolyl-1,10-phenanthroline, or 2,9-di(biphenyl-4-yl)-4,7-diphenyl-1,10-phenanthroline.

According to various embodiments of the OLED the matrix compound of the electron transport layer may be more preferred selected from:
- a phosphine oxide based compound, preferably (3-(dibenzo[c,h]acridin-7-yl)phenyl)diphenylphosphine oxide, 3-phenyl-3H-benzo[b]dinaphtho[2,1-d:1',2'-f]phosphepine-3-oxide and/or phenyl bis(3-(pyren-1-yl)phenyl)phosphine oxide.

According to various embodiments of the OLED of the present invention the thicknesses of the electron transport layer may be in the range of about ≥ 0.5 nm to about ≤ 95 nm, preferably of about ≥ 3 nm to about ≤ 80 nm, further preferred of about ≥ 5 nm to about ≤ 60 nm, also preferred of about ≥ 6 nm to about ≤ 40 nm, in addition preferred about ≥ 8 nm to about ≤ 20 nm and more preferred of about ≥ 10 nm to about ≤ 18 nm.

According to various embodiments of the OLED of the present invention the thicknesses of the electron transport layer stack can be in the range of about ≥ 25 nm to about ≤ 100 nm, preferably of about ≥ 30 nm to about ≤ 80 nm, further preferred of about ≥ 35 nm to about ≤ 60 nm, and more preferred of about ≥ 36 nm to about ≤ 40 nm.

According to one embodiment of the OLED, the electron transport layer comprises of about ≥ 50 wt.-% to about ≤ 60 wt.-% of a first lithium halide or a first lithium organic complex and about ≤ 50 wt.-% to about ≥ 40 wt.-% of a matrix compound of:
- a phosphine oxide based compound, preferably (3-(dibenzo[c,h]acridin-7-yl)phenyl)diphenylphosphine oxide, 3-phenyl-3H-benzo[b]dinaphtho[2,1-d:1',2'-f]phosphepine-3-oxide and/or phenyl bis(3-(pyren-1-yl)phenyl)phosphine oxide; or
- a substituted phenanthroline compound, preferably 2,4,7,9-tetraphenyl-1,10-phenanthroline, 4,7-diphenyl-2,9-di-p-tolyl-1,10-phenanthroline, or 2,9-di(biphenyl-4-yl)-4,7-diphenyl-1,10-phenanthroline.

The light-emitting diode (OLED) may comprises at least two electrodes, an anode electrode and a cathode electrode.

The electron transport layer/s or electron transport layer stack is not an electrode. The electron transport layer/s or electron transport layer are sandwiched between two electrodes, namely sandwiched between an anode and a second cathode.

The ETL may be formed optional on an EML or on the HBL if the HBL is formed. The ETL includes a first layer including a first lithium halide or a first lithium organic complex; and optional a second electron transport layer including a second lithium halide or a second lithium organic complex, wherein optional the first lithium organic complex is not the same as the second lithium organic complex and wherein the first lithium halide is not the same as the second lithium halide.

The ETL includes a first layer comprising a first matrix compound and a lithium halide or a lithium organic complex; and optional a second electron transport layer comprising a second matrix compound and a metal dopant selected from a group comprising alkali, alkaline earth and rare earth metals.

The ETL includes a first layer comprising a first matrix compound and a lithium halide or a lithium organic complex; and optional a second electron transport layer comprising a second matrix compound and is free of dopant.

The ETL may have a stacked structure, preferably of two ETL-layers, so that injection and transport of electrons may be balanced and holes may be efficiently blocked. In a conventional OLED, since the amounts of electrons and holes vary with time, after driving is initiated, the number of excitons generated in an emission area may be reduced. As a result, a carrier balance may not be maintained, so as to reduce the lifetime of the OLED.

However, in the ETL, the first layer and the second layer may have similar or identical energy levels, so that the carrier balance may be uniformly maintained, while controlling the electron-transfer rate.

Matrix compound for the electron layer that can be suitable used are selected from the group comprising anthracene compounds, preferably 2-(4-(9,10-di(naphthalen-2-yl)anthracen-2-yl)phenyl)-1-phenyl-1H-benzo[d]imidazole
Anthracene compounds that can be used as matrix materials are disclosed in US 6878469 B.

Other matrix compounds that can be used are diphenylphosphine oxide, preferably (3-(dibenzo[c,h]acridin-7-yl)phenyl)diphenylphosphine oxide, phenylbis(3-(pyren-1-yl)phenyl)phosphine oxide, 3-phenyl-3H-benzo[b]dinaphtho[2,1-d:1',2'-f]phosphepine-3-oxide, phenyldi(pyren-1-yl)phosphine oxide.

Diphenylphosphine oxide compounds that can be used as matrix materials are disclosed in EP 2395571 A1, WO2013079217 A1, EP 13187905, EP13199361 and JP2002063989 A1.

Other suitable matrix compounds that can be used are phenanthroline compounds, preferably selected from the group comprising of 2,4,7,9-tetraphenyl-1,10-phenanthroline, 4,7-diphenyl-2,9-di-p-tolyl-1,10-phenanthroline, and 2,9-di(biphenyl-4-yl)-4,7-diphenyl-1,10-phenanthroline. Phenanthroline compounds that can be used as matrix materials are disclosed in EP 1786050 A1.

The matrix compound of the electron transport layer may be a compound that efficiently transports electrons, such as an anthracene-based compound, diphenylphosphine oxide based compound, or a phenanthroline based compound, preferably a matrix compound mentioned in Table 4. For example, the matrix compound of the electron transport layer may be selected from the group consisting of Compound 5, a compound represented by Formula 2, and a compound represented by Formula 3 below:

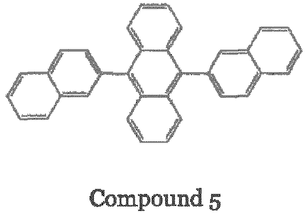

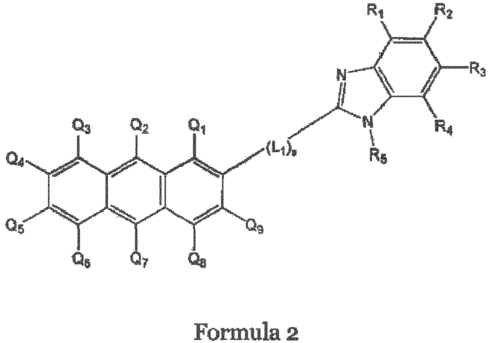

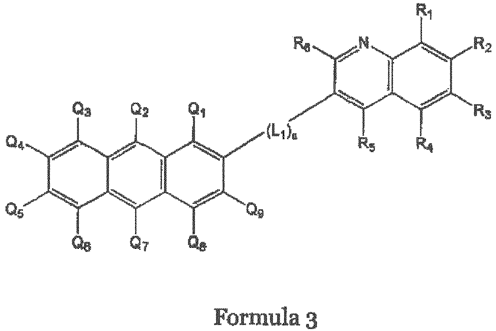

In Formulae 2 and 3, R₁ to R₆ are each independently a hydrogen atom, a halogen atom, a hydroxy group, a cyano group, a substituted or unsubstituted C₁-C₃₀ alkyl group, a substituted or unsubstituted C₁-C₃₀ alkoxy group, a substituted or unsubstituted C₁-C₃₀ acyl group, a substituted or unsubstituted C₂-C₃₀ alkenyl group, a substituted or unsubstituted C₂-C₃₀ alkynyl group, a substituted or unsubstituted C₆-C₃₀ aryl group, or a substituted or unsubstituted C₃-C₃₀ heteroaryl group. At least two adjacent R₁ to R₆ groups are optionally bonded to each other, to form a saturated or unsaturated ring. L₁ is a bond, a substituted or unsubstituted C₁-C₃₀ alkylene group, a substituted or unsubstituted C₆-C₃₀ arylene group, or a substituted or unsubstituted C₃-C₃₀ hetero arylene group. Q₁ through Q₉ are each independently a hydrogen atom, a substituted or unsubstituted C₆-C₃₀ aryl group, or a substituted or unsubstituted C₃-C₃₀ hetero aryl group, and "a" is an integer from 1 to 10.

For example, R₁ to R₆ may be each independently selected from the group consisting of a hydrogen atom, a halogen atom, a hydroxy group, a cyano group, a methyl group, an ethyl group, a propyl group, a butyl group, a methoxy group, an ethoxy group, a propoxy group, a butoxy group, a phenyl group, a naphthyl group, an anthryl group, a pyridinyl group, and a pyrazinyl group.

In particular, in Formula 2 and/or 3, R₁ to R₄ may each be a hydrogen atom, R₅ may be selected from the group consisting of a halogen atom, a hydroxy group, a cyano group, a methyl group, an ethyl group, a propyl group, a butyl group, a methoxy group, an ethoxy group, a propoxy group, a butoxy group, a phenyl group, a naphthyl group, an anthryl group, a pyridinyl group, and a pyrazinyl group. In addition, in Formula 3, R1 to R₆ may each be a hydrogen atom.

For example, in Formula 2 and/or 3, Q₁ to Q₉ are each independently a hydrogen atom, a phenyl group, a naphthyl group, an anthryl group, a pyridinyl group, and a pyrazinyl group. In particular, in Formulae 2 and/or 3, Q₁, Q₃-Q₆, Q₈ and Q₉ are hydrogen atoms, and Q₂ and Q₇ may be each independently selected from the group consisting of a phenyl group, a naphthyl group, an anthryl group, a pyridinyl group, and a pyrazinyl group.

For example, L₁, in Formula 2 and/or 3, may be selected from the group consisting of a phe-nylene group, a naphthylene group, an anthrylene group, a pyridinylene group, and a pyrazi-nylene group. In particular, L1 may be a phenylene group or a pyridinylene group. For example, "a" may be 1, 2, or, 3.

The matrix compound for the ETL-layer may be further selected from Compound 5, 6, or 7 below:

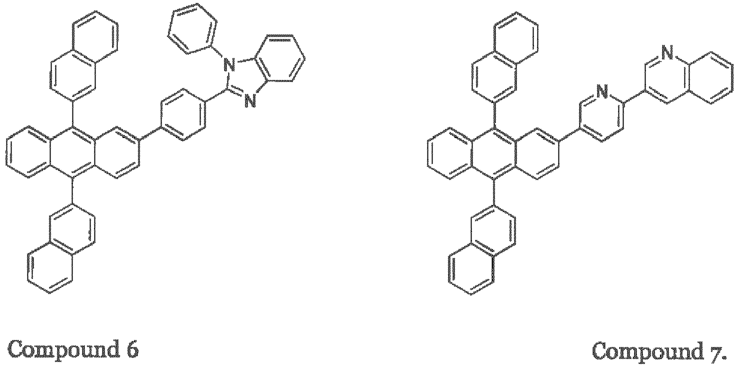

**Table 2**

| Chemical structures of matrix materials that can be suitable used for ETL- and /or EIL-layer | | | |
|---|---|---|---|
| Compound | Name | Structure | Publication |
| MX1 | 2-(4-(9,10-di(naphthalen-2-yl)anthracen-2-yl)phenyl)-1-phenyl-1H-benzo[d]imidazole | 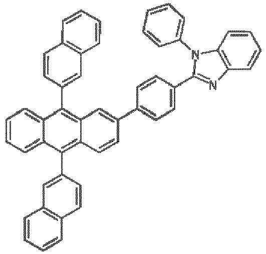 | US 6878469 B2 |
| MX2 | (3-(dibenzo[c,h]acridin-7-yl)phenyl)diphenylphosphin e oxide | 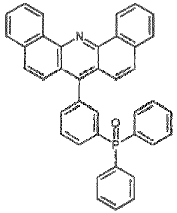 | EP 2395571B1, WO2013079217A1 |
| MX3 | Phenylbis(3-(pyren-1-yl)phenyl)phosphine oxide | 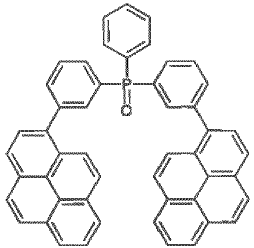 | EP13187905.8 |

| Compound | Name | Structure | Publication |
|---|---|---|---|
| MX 4 | 3-Phenyl-3H-benzo[b]dinaphtho[2,1-d:1',2'-f]phosphepine-3-oxide | 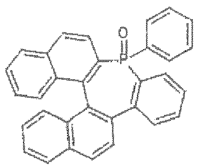 | EP13199361.0 |
| MX 5 | Phenyldi(pyren-1-yl)phosphine oxide | 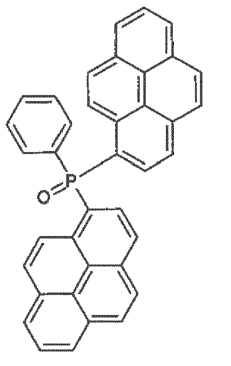 | JP4876333 |
| MX 6 | 2,4,7,9-tetraphenyl-1,10-phenanthroline | 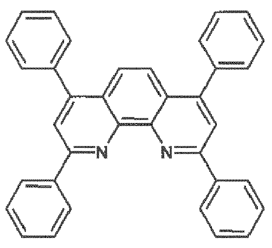 | EP1786050 |
| MX 8 | 2,9-di(biphenyl-4-yl)-4,7-diphenyl-1,10-phenanthroline | 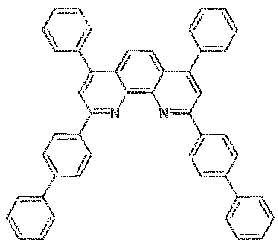 | EP1786050 |
| MX9 | bis(4-(anthracen-9-yl)phenyl)(phenyl)phosphin e oxide | 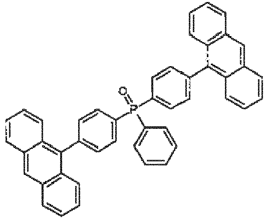 | EP13187905 |
| MX10 | 4,7-diphenyl-2,9-di-p-tolyl-1,10-phenanthroline | 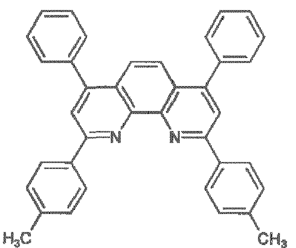 | EP1786050 |
| MX11 | 1-(4-(10-([1,1'-biphenyl]-4-yl)anthracen-9-yl)phenyl)-2-ethyl-1H-benzo[d]imidazole | 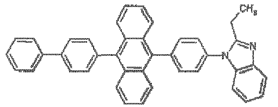 | WO2010134352 |

The electron transport layer may comprises a lithium halide or a lithium organic complex.

Suitable organic ligands to form a lithium organic complex that can be used for the electron transport layer are disclosed, for example, in US 2014/0048792 and Kathirgamanathan, Poopathy; Arkley, Vincent; Surendrakumar, Sivagnanasundram; Chan, Yun F.; Ravichan-dran, Seenivasagam; Ganeshamurugan, Subramaniam; Kumaraverl, Muttulingam; Antipan-Lara, Juan; Paramaswara, Gnanamolly; Reddy, Vanga R., Digest of Technical Papers - Society for Information Display International Symposium (2010), 41(Bk. 1), 465-468.

The organic ligand of the lithium organic complex of the electron transport layer may be selected from the group comprising a quinolate, a borate, a phenolate, a pyridinolate or a Schiff base ligand, or Table 1;
- preferably the lithium quinolate complex has the formula III: 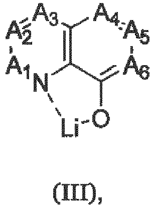 wherein
   A₁ to A₆ are same or independently selected from CH, CR, N, O;
   R is same or independently selected from hydrogen, halogen, alkyl or aryl or heteroaryl with 1 to 20 carbon atoms; and more preferred A₁ to A₆ are CH;
- preferably the borate based organic ligand is a tetra(1H-pyrazol-1-yl)borate;
- preferably the phenolate is a 2-(pyridin-2-yl)phenolate or a 2-(diphenylphosphoryl)phenolate;
- preferably the lithium Schiff base has the structure 100, 101, 102 or 103: 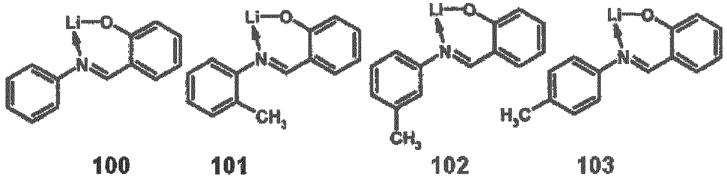
- more preferred the lithium organic complex is selected from a compound of Table 1.

The lithium halide of the electron transport layer may be selected from the group comprising a LiF, LiCl, LiBr or LiJ, and preferably LiF.

The ETL may be formed on the EML by vacuum deposition, spin coating, slot-die coating, printing, casting, or the like. When the ETL is formed by vacuum deposition or spin coating, the deposition and coating conditions may be similar to those for formation of the HIL 130. However, the deposition and coating conditions may vary, according to a compound that is used to form the ETL.

### Electron injection layer (EIL)

The optional EIL, which may facilitates injection of electrons from the cathode, may be formed on the ETL, preferably directly on the electron transport layer. Examples of materials for forming the EIL include LiQ, LiF, NaCl, CsF, Li₂O, BaO, Ca, Ba, Yb, Mg which are known in the art. Deposition and coating conditions for forming the EIL are similar to those for formation of the HIL, although the deposition and coating conditions may vary, according to a material that is used to form the EIL.

The thickness of the EIL may be in the range of about 0.1 nm to 10 nm, for example, in the range of 0.5 nm to 9 nm. When the thickness of the EIL is within this range, the EIL may have satisfactory electron-injecting properties, without a substantial increase in driving volt-age.

### Cathode electrode

The cathode electrode is formed on the EIL if present. The cathode electrode may be a cath-ode, which is an electron-injecting electrode. The cathode electrode may be formed of a metal, an alloy, an electrically conductive compound, or a mixture thereof. The cathode electrode may have a low work function. For example, the cathode electrode may be formed of lithium (Li), magnesium (Mg), aluminum (Al), aluminum (Al)-lithium (Li), calcium (Ca), barium (Ba), ytterbium (Yb), magnesium (Mg)-indium (In), magnesium (Mg)-silver (Ag), or the like. In addition, the cathode electrode may be formed of a transparent conductive material, such as ITO or IZO.

The thickness of the cathode electrode may be in the range of about 5 nm to 1000 nm, for example, in the range of 10 nm to 100 nm. When the cathode electrode is in the range of 5 nm to 50 nm, the electrode will transparent even if a metal or metal alloy is used.

The cathode electrode is not an electron injection layer or electron transport layer.

Since the layers of the ETL have similar or identical energy levels, the injection and transport of the electrons may be controlled, and the holes may be efficiently blocked. Thus, the OLED may have long lifetime.

### Charge generation layer

The charge generation layer (CGL) is composed of a double layer.

To be more specific, the charge generation layer can be a pn junction charge generation layer joining n-type charge generation layer 185 and p-type charge generation layer 135. The pn junction charge generation layer generates charges or separates them into holes and electrons; and injects the charges into the individual light emission layer. In other words, the n-type charge generation layer 185 provides electrons for the first light emission layer 150 near the anode while the p-type charge generation layer 135 provides holes to the second light emission layer 151 near the cathode 190, by which luminous efficiency of an organic light emitting device incorporating multiple light emission layers can be further improved and at the same time, driving voltage can be lowered.

The p-type charge generation layer 135 can be composed of metal or organic material doped with p-type dopant. Here, the metal can be one or an alloy consisting of two or more selected from a group consisting of Al, Cu, Fe, Pb, Zn, Au, Pt, W, In, Mo, Ni, and Ti. Also, p-type dopant and host used for organic material doped with the p-type can employ conventional materials. For example, the p-type dopant can be one selected from a group consisting of tetrafluore-7,7,8,8-tetracyanoquinodimethane (F₄-TCNQ), derivative of tetracyanoquinodimethane, radialene derivative, iodine, FeCl₃, FeF₃, and SbC15. Also, the host can be one selected from a group consisting of N,N'-di(naphthalen-1-yl)-N,N-diphenyl-benzidine (NPB), N,N'-diphenyl-N,N'-bis(3-methylphenyl)-1,1-biphenyl-4,4'-diamine (TPD) and N,N',N'-tetranaphthyl-benzidine (TNB).

The n-type charge generation layer 185 can be composed of metal or organic material doped with n-type. The metal can be one selected from a group consisting of Li, Na, K, Rb, Cs, Mg, Ca, Sr, Ba, La, Ce, Sm, Eu, Tb, Dy, and Yb. Also, n-type dopant and host used for organic material doped with the n-type can employ conventional materials. For example, the n-type dopant can be alkali metal, alkali metal compound, alkali earth metal, or alkali earth metal compound. More specifically, the n-type dopant can be one selected from a group consisting of Cs, K, Rb, Mg, Na, Ca, Sr, Eu and Yb. The host material can be one selected from a group consisting of tris(8-hydroxyquinoline)aluminum, triazine, hydroxyquinoline derivative, ben-zazole derivative, and silole derivative.

In a preferred embodiment, the host material is selected from compound of formula (I).

In another preferred embodiment, the electron transport layer comprised compound of formula (I) and an n-type charge generation layer (185), which is arranged adjacent to the electron transport layer. The n-type charge generation layer according to one example may include compounds of the following Chemical Formula X. 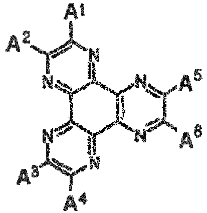 (X), wherein each of A1 to A6 may be hydrogen, a halogen atom, nitrile (-CN), nitro (-NO2), sulfonyl (-SO2R), sulfoxide (-SOR), sulfonamide (-SO2NR), sulfonate (-SO₃R), trifluoromethyl (-CF3), ester (-COOR), amide (-CONHR or - CONRR'), substituted or unsubstituted straight-chain or branched-chain C1-C12 alkoxy, substituted or unsubstituted straight-chain or branched-chain C1-C12 alkyl, substituted or unsubstituted straight-chain or branched chain C2-C12 alkenyl, a substituted or unsubstituted aromatic or non-aromatic heteroring, substituted or unsubstituted aryl, substituted or unsubstituted mono- or di-arylamine, substituted or unsubstituted aralkylamine, or the like. Herein, each of the above R and R' may be substituted or unsubstituted C1-C60 alkyl, substituted or unsubstituted aryl, or a substituted or unsubstituted 5- to 7-membered heteroring, or the like.

Particularly preferred is an n-type charge generation layer comprising CNHAT

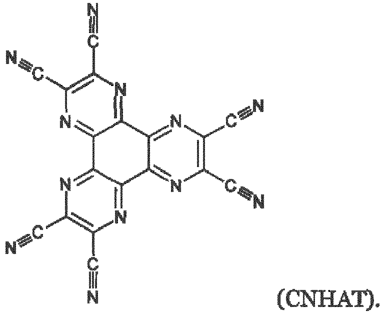

The p-type charge generation layer is arranged on top of the n-type charge generation layer. As the materials for the p-type charge generation layer (135), aryl amine-based compounds may be used. One embodiment of the aryl amine-based compounds includes compounds of the following Chemical Formula Y: 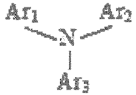 (Y), wherein
An, Ar2 and Ar3 are each independently hydrogen or a hydrocarbon group.

Herein, at least one of Ari, Ar2 and Ar3 may include aromatic hydrocarbon substituents, and each substituent may be the same, or they may be composed of different substituents. When Ar1, Ar2 and Ar3 are not aromatic hydrocarbons, they may be hydrogen; a straight-chain, branched-chain or cyclic aliphatic hydrocarbon; or a heterocyclic group including N, O, S or Se.

### Organic light-emitting diode (OLED)

According to another aspect of the present invention, there is provided an organic light-emitting diode (OLED) comprising: a substrate; a anode electrode formed on the substrate; a hole injection layer, a hole transport layer, an emission layer, and a cathode electrode.

According to another aspect of the present invention, there is provided an organic light-emitting diode (OLED) comprising: a substrate; a anode electrode formed on the substrate; a hole injection layer, a hole transport layer, an electron blocking layer, an emission layer, hole blocking layer and a cathode electrode.

According to another aspect of the present invention, there is provided an organic light-emitting diode (OLED) comprising: a substrate; a anode electrode formed on the substrate; a hole injection layer, a hole transport layer, and electron blocking layer, an emission layer, hole blocking layer, electron transport layer, and a cathode electrode.

According to another aspect of the present invention, there is provided an organic light-emitting diode (OLED) comprising: a substrate; a anode electrode formed on the substrate; a hole injection layer, a hole transport layer, an electron blocking layer, an emission layer, hole blocking layer, electron transport layer, an electron injection layer, and a cathode electrode.

According to various embodiments of the present invention, there is provided an organic light-emitting diode (OLED) further comprising an electron injection layer formed between the electron transport layer and the cathode electrode.

According to various embodiments of the OLED of the present invention, the OLED may not comprises an electron injection layer.

According to various embodiments of the OLED of the present invention, the OLED may not comprises an electron transport layer.

According to various embodiments of the OLED of the present invention, the OLED may not comprises an electron transport layer and an electron injection layer. According to one aspect an OLED can comprise a layer structure of a substrate that is adjacent arranged to an anode electrode, the anode electrode is adjacent arranged to a first hole injection layer, the first hole injection layer is adjacent arranged to a first hole transport layer, the first hole transport layer is adjacent arranged to a first electron blocking layer, the first electron blocking layer is adjacent arranged to a first emission layer, the first emission layer is adjacent arranged to a first electron transport layer, the first electron transport layer is adjacent arranged to an n-type charge generation layer, the n-type charge generation layer is adjacent arranged to a p-type charge generation layer, the p-type charge generation layer is adjacent arranged to a second hole injection layer, the second hole injection layer is adjacent arranged to a second hole transport layer, the second hole transport layer is adjacent arranged to a second electron blocking layer, the second electron blocking layer is adjacent arranged to a second emission layer, between the second emission layer and the cathode electrode an optional electron transport layer and/or an optional injection layer are arranged.

According to another aspect of the present invention, there is provided a method of manufacturing an organic light-emitting diode (OLED), the method using:
- at least one deposition source, preferably two deposition sources and more preferred at least three deposition sources; and/or
- deposition via vacuum thermal evaporation; and/or
- deposition via solution processing, preferably the processing is selected from spin-coating, printing, casting and/or slot-die coating.

According to another aspect, there is provided a method comprising the steps, wherein
- on a substrate (110) an anode (120) is formed,
- on the anode (120) an emission layer (150) is formed,
- on the emission layer (150) an electron transport layer (160) is formed,
- on the electron transport layer (160) a cathode electrode (190) is formed,
- optional a hole injection layer (130), a hole transport layer (140), an electron blocking layer (145), an emission layer (150), and a hole blocking layer, are formed in that order between the at least anode (120) and the electron transport layer (160),
- optional an electron injection layer (180) is arranged between the electron transport layer (160) and the cathode (190).

### Further Materials

Besides the above mentioned compound PD-2, further supporting materials may be used in combination with the inventive compounds to build the inventive semiconducting layer. In detail, the following additional supporting materials are particularly preferred and resulted in the best results. 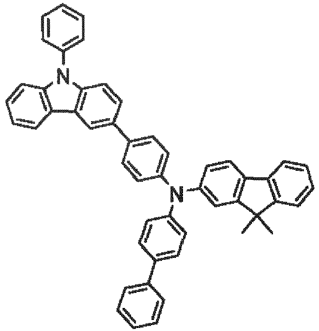 biphenyl-4-yl(9,9-diphenyl-9H-fluoren-2-yl)-[4-(9-phenyl-9H-carbazol-3-yl)phenyl]-amine, CAS 1242056-42-3, F1; 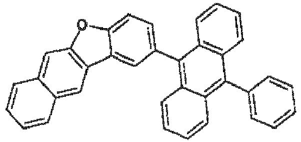 (published in EP 2 924 029), CAS 1627916-48-6, F2; 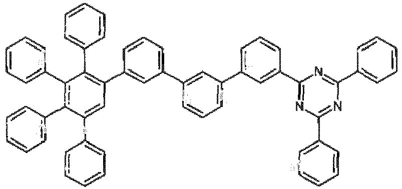 (published in WO2016/171358), CAS 1440545-22-1, F3; 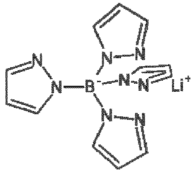 CAS 14728-62-2 , F4;
LiQ which is lithium 8-hydroxyquinolinolate;
NUBD-370 which is a blue fluorescent emitter dopant; both F2 and NUBD-370 are commercially available from SFC, Korea.

### BRIEF DESCRIPTION OF THE DRAWINGS

These and/or other aspects and advantages of the present invention will become apparent and more readily appreciated from the following description of the exemplary embodiments, taken in conjunction with the accompanying drawings, of which:
FIG. 1 is a schematic sectional view of an organic light-emitting diode (OLED), according to an exemplary embodiment of the present invention;
FIG. 2 is a schematic sectional view of an OLED, according to an exemplary embodiment of the present invention.
FIG. 3 is a schematic sectional view of a tandem OLED comprising a charge generation layer, according to an exemplary embodiment of the present invention.

### DETAILED DESCRIPTION

Reference will now be made in detail to the exemplary embodiments of the present invention, examples of which are illustrated in the accompanying drawings, wherein like reference numerals refer to the like elements throughout. The exemplary embodiments are described below, in order to explain the aspects of the present invention, by referring to the figures.

Herein, when a first element is referred to as being formed or disposed "on" a second element, the first element can be disposed directly on the second element, or one or more other elements may be disposed there between. When a first element is referred to as being formed or disposed "directly on" a second element, no other elements are disposed there between.

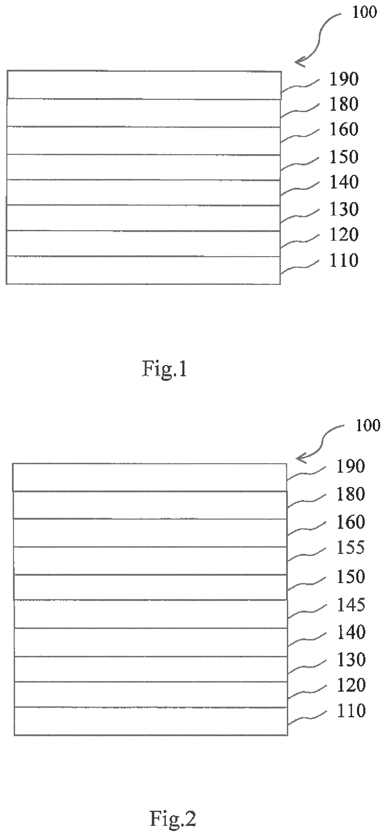

FIG. 1 is a schematic sectional view of an organic light-emitting diode (OLED) 100, according to an exemplary embodiment of the present invention. The OLED 100 includes a substrate 110, an anode 120, a hole injection layer (HIL) 130, a hole transport layer (HTL) 140, an emission layer (EML) 150, an electron transport layer (ETL) 160. The electron transport layer (ETL) 160 comprising or consisting of the compound of formula (1) is formed directly on the EML 150. Onto the electron transport layer (ETL) 160 an electron injection layer (EIL) 180 is disposed. The cathode 190 is disposed directly onto the electron injection layer (EIL) 180.

Instead of a single electron transport layer 160, optional an electron transport layer stack (ETL) can be used.

Fig. 2 is a schematic sectional view of an OLED 100, according to another exemplary embodiment of the present invention. Fig. 2 differs from Fig. 1 in that the OLED 100 of Fig. 2 comprises an electron blocking layer (EBL) 145 and a hole blocking layer (HBL) 155.

Referring to Fig. 2 the OLED 100 includes a substrate 110, an anode 120, a hole injection layer (HIL) 130, a hole transport layer (HTL) 140, an electron blocking layer (EBL) 145, an emission layer (EML) 150, a hole blocking layer (HBL) 155, an electron transport layer (ETL) 160, an electron injection layer (EIL) 180 and a cathode electrode 190. The electron transport layer (ETL) 160 and/or the electron injection layer (EIL) 180 comprise or consist of the compound of formula (1).

In the description above the method of manufacture an OLED 100 of the present invention is started with a substrate 110 onto which an anode 120 is formed, on the anode electrode 120, an hole injection layer 130, hole transport layer 140, optional an electron blocking layer 145, an emission layer 150, optional a hole blocking layer 155, optional at least one electron transport layer 160, optional at least one electron injection layer 180, and a cathode 190 are formed, in that order or the other way around.

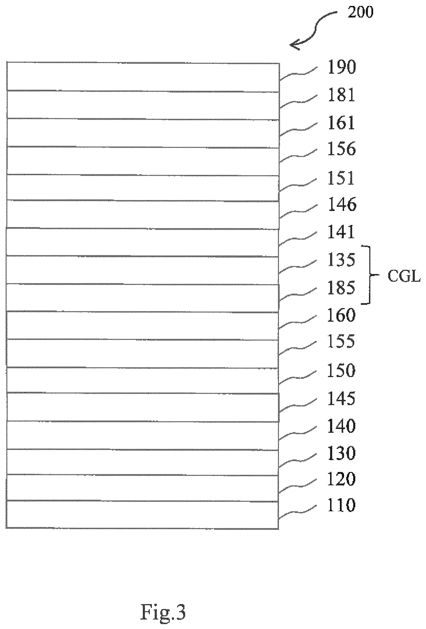

Fig. 3 is a schematic sectional view of a tandem OLED 200, according to another exemplary embodiment of the present invention. Fig. 3 differs from Fig. 2 in that the OLED 100 of Fig. 3 further comprises a charge generation layer and a second emission layer.

Referring to Fig. 3 the OLED 200 includes a substrate 110, an anode 120, a first hole injection layer (HIL) 130, a first hole transport layer (HTL) 140, a first electron blocking layer (EBL) 145, a first emission layer (EML) 150, a first hole blocking layer (HBL) 155, a first electron transport layer (ETL) 160, an n-type charge generation layer (n-type CGL) 185 which may comprise compound of formula (1), a p-type charge generation layer (p-type GCL) 135, a second hole transport layer (HTL) 141, a second electron blocking layer (EBL) 146, a second emission layer (EML) 151, a second hole blocking layer (EBL) 156, a second electron transport layer (ETL) 161, a second electron injection layer (EIL) 181 and a cathode 190. The electron transport layers (ETL) 160 and 161 and/or the electron injection layer (EIL) 180 and/or the n-type charge generation layer (n-type CGL) 185 comprise or consist of the compound of formula (1).

In the description above the method of manufacture an OLED 200 of the present invention is started with a substrate 110 onto which an anode 120 is formed, on the anode electrode 120, a first hole injection layer 130, first hole transport layer 140, optional a first electron blocking layer 145, a first emission layer 150, optional a first hole blocking layer 155, optional at least one first electron transport layer 160, an n-type CGL 185, a p-type CGL 135, a second hole transport layer 141, optional a second electron blocking layer 146, a second emission layer 151, an optional second hole blocking layer 156, an optional at least one second electron transport layer 161, an optional electron injection layer 181, and a cathode 190 are formed, in that order or the other way around.

While not shown in Fig. 1, Fig. 2 and Fig. 3, a sealing layer may further be formed on the cathode electrodes 190, in order to seal the OLEDs 100 and 200. In addition, various other modifications may be applied thereto.

Hereinafter, one or more exemplary embodiments of the present invention will be described in detail with, reference to the following examples. However, these examples are not intended to limit the purpose and scope of the one or more exemplary embodiments of the present invention.

### Preparation of compounds of formula (1)

Dialkyphosphine oxides may be prepared using known procedures (method a: Hays, R.H., The Journal of Organic Chemistry 1968 33 (10), 3690-3694 ; method b: W. Voskuil and J. F. Arens Org. Synth. 1968,48,47).

### Method 1

### 1. Synthesis of dialkylphosphine oxide with R¹ = R²

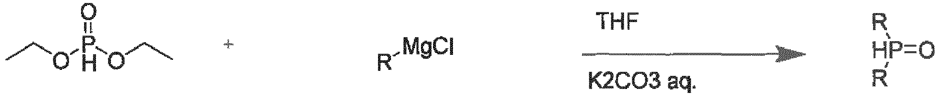

Diethyl phosphonate (0.95 eq) is added to an ice cooled Grignard solution in THF (3 eq) at such a rate that a temperature of the reaction mixture is maintained at 20-30°C After stirring at room temperature for 1 h the mixture is hydrolyzed by mixing it with an ice-cold saturated aqueous solution of potassium carbonate (3 eq). Precipitated magnesium carbonate is removed by filtration and washed several time with ethanol. Combined filtrates are concentrated in vacuum to give a crude material, which could be further purified by distillation or re-crystallization from an appropriate solvent.

### Method 2

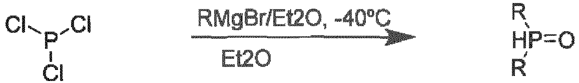

Grignard solution in THF or Et₂O (2 eq.) was added dropwise to an solution of phosphorus trichloride (1eq) in diethyl ether (2ml/mmol of PCl3) at -40°C. The reaction mixture is stirred for 30min at -40° and then allowed to reach room temperature over 3h. Reaction is terminated by addition of water (∼3eq). A solvent is evaporated at reduced pressure, an oily residue with some solid is diluted with dichloromethane, filtered, the solution is evaporated to dryness yielding an clear oil. This oily residue is then dissolved in a boiling heptane/ethyl acetate mixture (1:10), the solution allowed to cool down to the room temperature, two liquid phases are formed upon cooling. The upper (heptane) phase is discharged; the lower phase is concentrated in vacuum yielding a crude product. Additional purification could be achieved by re-crystallization or by vacuum distillation.

**Table 1**

| **Starting materials and products** | | | |
|---|---|---|---|
| **Starting compound** | **Method** | **Product** | **Yield / MS data** |
| Methylmagnesium chloride | 1 | Dimethylphosphine oxide | 70.8 % / 78 [M]⁺ |
| Ethylmagnesium bromide | 1 | Diethylphosphine oxide | */106[M+] |
| Isopropylmagnesium bromide | 2 | Diisopropylphosphine oxide | */134[M+] |
| Tert-butylmagnesium bromide | 2 | Di-tert-butylphosphine oxide | */162[M+] |
| Butylmagnesium bromide | 1 | Dibutylphosphine oxide | |
| Cyclohexylmagnesium bromide | 2 | Dicyclohexylphosphine oxide | 100% / 214[M]⁺ |

### 2. Typical procedure for coupling of dialkylphosphine oxide with arylhalides

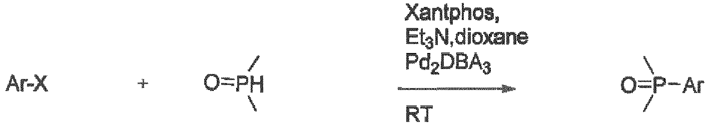

### X=Br, I

Schlenck flask is charged with arylhalide (1 eq), dialkylphoshine oxide (1 eq.) and sealed with a rubber septum. Atmosphere is replaced by Argon and the starting compounds are dissolved in anhydrous dioxane or suspended in dioxane-THF mixture (1:1 vol.) In a separate vial, a mixture of tris(dibenzylideneacetone)dipalladium (0.005eq), Xantphos (0,01eq) and triethylamine (1.17eq.) is dissolved in anhydrous dioxane (75ml/mmol) at 24 °C for 10 min. This catalyst solution is added to the mixture of phosphine oxide and aryl halide and the reaction mixture was stirred for 12-24h at 24°C.

*Work up procedure 1:* A precipitated solid (trimethylamine salt) is separated by filtration through sintered glass filter (Pore size 4), washed two times with dioxane, combined filtrates are evaporated to a dryness under reduced pressure using a rotary evaporator. The residue is dissolved in water, pH is set to alkaline (∼14) using aqueous potassium hydroxide solution. Resulting yellow turbid aqueous layer is sequentially extracted with hexane and diethyl ether. Combined organic layers are extracted with ∼0.5M aqueous KOH solution, aqueous phases are combined, acidified by hydrochloric acid and extracted with dichloromethane. Combined extracts are washed with saturated sodium hydrocarbonate solution, brine and dried over magnesium sulfate. Solvent is removed under reduced pressure, residue is triturated with hexane, white crystalline precipitate is collected by vacuum filtration, washed with hexane and dried.

*Work up procedure 2:* Reaction mixture is diluted with water, precipitated material is collected by suction using a sintered glass filter (pore 4), washed with water, methanol and dried. Crude product could be further purified by re-crystallization from appropriate solvent.

**Table 2**

| **Starting materials and intermediates** | | | |
|---|---|---|---|
| **Starting compound** | **Work-up Method** | **Intermediate** | **Yield** / **MS data** |
| 1-Bromo-4-iodobenzene | 2 | (4-bromophenyl) dimethylphosphine oxide | 70.8 % / 233[M]⁺ |
| 1-bromo-3-iodobenzene | 1 | (3-bromophenyl) dimethylphosphine oxide | 92,6%/233[M+] |

### 3. Procedures for Suzuki-Miyaura coupling

### Method a.

A three neck round bottom flask, equipped with dropping funnel, reflux condenser and magnetic stir bar is charged with boronic ester (1 eq) and bromophenyldialkylphosphine oxide (1.5 eq), the flask is sealed with a rubber septum, evacuated and back-filled with argon (2 times). Anhydrous THF (10ml/mmol of boronic ester) is added through the septum using a double-tipped needle. Separately, a catalyst is prepared by suspending of bis(dibenzylidenaceton)palladium (0.02 eq) and tri-tert-butylphosphane (0.04 eq) in a small amount of anhydrous THF under Argon. The catalyst suspension is added to the reaction mixture through the septum with a syringe. Deoxygenated aqueous solution of tetrabutylammonium hydroxide (∼20% wt., 2 eq) is added dropwise to the reaction mixture at room temperature (addition time ∼30 min). Reaction mixture is stirred at room temperature for 2 h, precipitated product is separated by filtration, washed with water, methanol, and hexane, dried in vacuum at 40°C for 48 h. Crude product is then triturated with hot dichloromethane/hexane mixture (1:1 vol, ∼300ml), hot filtered and dried in vacuum at 50°C for 1 h and at 120° for 1 h. Final purification is achieved by sublimation in a high vacuum.

### Method b.

Potassium carbonate (51.4mmol, 3 eq.) is dissolved in ∼25ml of deionized water, the solution is degassed with N₂ for 30 min. Glyme (175ml) is degassed in a 500mL 3-necked round bottom flask with N₂ for 30 min. The flask is then charged with boronic ester (17.14mmol, 1 eq.), bromophenyldialkylphosphine oxide (17.99mmol, 1.05eq.) and tetrakis(triphenylphosphin)palladium(o) (0.51 mmol, 0.03 eq.) under a positive nitrogen pressure. The degassed potassium carbonate solution is added using a syringe, nitrogen purged reflux condenser is attached to the flask and a reaction mixture heated to 90°C with stirring for 12 h. The mixture is allowed to cool down to the room temperature, a precipitate is collected by filtration, washed with water, methanol, dried in vacuum at 40°C to give a crude product, which could be further purified by re-crystallization or trituration with appropriate solvents. Final purification is achieved by sublimation in a high vacuum.

### Method c.

Potassium carbonate (20 mmol, 2 eq.) is dissolved in ∼10ml of deionized water, the solution is degassed with N₂ for 30 min. Dioxane (40ml) is degassed in a 100mL 3-necked round bottom flask with N₂ for 30 min. The flask is then charged with corresponding arylboronic acid, arylbromide or arylchloride (10mmol, 1 eq.), dialkylphosphine oxide derivative (22mmol, 1.1eq.) and tetrakis(triphenylphosphin)palladium(o) (0.2 mmol, 0.02 eq.) under a positive nitrogen pressure. The degassed potassium carbonate solution is added using a syringe, nitrogen purged reflux condenser is attached to the flask and a reaction mixture heated to 90°C with stirring for 12 h. The mixture is allowed to cool down to the room temperature, a precipitate is collected by filtration, washed with water, methanol, dried in vacuum at 40°C to give a crude product, which could be further purified by re-crystallization or trituration with appropriate solvents. Final purification is achieved by sublimation in a high vacuum.

### Method d.

Potassium carbonate (40mmol, 2eq.) is dissolved in ∼20ml of deionized water, the solution is degassed with N₂ for 30 min. A mixture of toluene and ethanol (15:6 vol., 112ml) is degassed in a 500mL 3-necked round bottom flask with N2 for 30 min. The flask is then charged with trifluoromethanesulfonate (20mmol, 1 eq.), boronic acid pinacol ester (22mmol, 1.1eq.) and [1,1'-Bis(diphenylphosphino)ferrocene]dichloropalladium(II) (0.40 mmol, 0.02 eq.) under a positive nitrogen pressure. The degassed potassium carbonate solution is added using a syringe, nitrogen purged reflux condenser is attached to the flask and a reaction mixture heated to 90°C with stirring for 12 h. The mixture is allowed to cool down to the room temperature, a precipitate is collected by filtration, washed with water, methanol, dried in vacuum at 40°C to give a crude product, which could be further purified by re-crystallization or trituration with appropriate solvents. Final purification is achieved by sublimation in a high vacuum.

**Table 3**

| **Starting intermediates and final products** | | | | |
|---|---|---|---|---|
| **Starting boronic compound** | **Starting halide** | **Synthetic Method** | **Product** | **Yield / MS data** |
| (9,10-di(naphthalen-2-yl)anthracen-2-yl)boronic acid | (3-bromophenyl) dimethylphosphine oxide | a | E1 | 59% / 583[M+H]⁺ |
| (9,10-di(naphthalen-2-yl)anthracen-2-yl)boronic acid | (4-bromophenyl) dimethylphosphine oxide | b | E2 | 92,6%/583[M+H]+ |
| Phenylboronic acid | (3-(9,10-dibromoanthracen-2-yl)phenyl)dimethylphosphine oxide | b | E3 | 57%/483[M+H]+ |
| [1,1'-biphenyl]-4-ylboronic acid | (3-(9,10-dibromoanthracen-2-yl)phenyl)dimethylphosphine oxide | b | E4 | 60%/483[M+H]+ |
| Phenylboronic acid | (4-(9,10-dibromoanthracen-2-yl)phenyl)dimethylphosphine oxide | b | E₅ | 61%/483[M+H]+ |
| [1,1'-biphenyl]-4-ylboronic acid | (4-(9,10-dibromoanthracen-2-yl)phenyl)dimethylphosphine oxide | b | E6 | 47%/635[M+H]+ |

### Synthesis of asymmetrical dialkylphosphine oxides

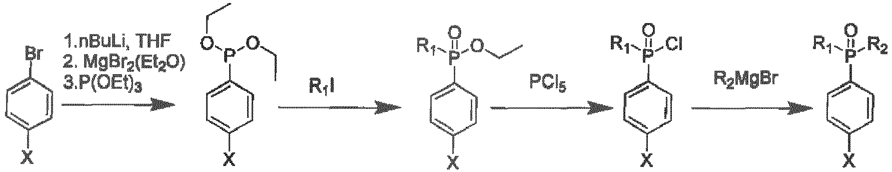

### General Procedure for Diethyl Phosphonites

Aryl bromide (0.15 mol) is dissolved in dry tetrahydrofuran (150 mL) under N₂, the solution is cooled down to -78°C. nBuLi (0.158 mol, 1.05 eq) is added dropwise to the reaction mixture at this temperature, the mixture is stirred for 1 h at -78°C for additional 1 hour. Magnesium bromide ethyl etherate (0.165mol, 1.1 eq) is added at this temperature, and the mixture is allowed to reach a room temperature during 1 h. Triethylphosphite (0.1mol, 0.66 eq) is added in one portion at room temperature, the mixture is then stirred at 50° for additional 1-3 h to complete the reaction. After removal the solvent under reduced pressure the crude materials is obtained. Further purification could be achieved by vacuum distillation.

**Table 4**

| **Starting materials and products** | |
|---|---|
| **Starting compound(s)** | **Product** |
| 1,4-dibromobenzene | diethyl (4-bromophenyl)phosphonite |
| 1.3-dibromobenzene | diethyl (3-bromophenyl)phosphonite |

### General Procedure for Phosphinate

The phosphonite (55.0 mmol) is added drop-wise to a two neck round bottom flask containing alkyl iodide (1.6 mmol, neat or a solution in THF) at a rate to maintain a steady reflux. The reaction was stirred for a further 18 h, and then purified via vacuum distillation.

**Table 5**

| **Starting materials and products** | |
|---|---|
| **Starting compound(s)** | **Product** |
| diethyl (4-bromophenyl)phosphonite | ethyl (4-bromophenyl) (methyl)phosphinate |
| diethyl (3-bromophenyl)phosphonite | ethyl (3-bromophenyl) (methyl)phosphinate |
| diethyl (4-bromophenyl)phosphonite | ethyl (4-bromophenyl)(ethyl)phosphinate |
| diethyl (3-bromophenyl)phosphonite | ethyl (3-bromophenyl)(ethyl)phosphinate |

### General Procedure for Phosphinic Chloride

Phosphinate (35.0 mmol) is dissolved in 1,2-dichloroethane (30 ml) and phosphorus pentachloride (35.1 mmol) is added at a rate to maintain the temperature at 40°C. Following complete addition, the reaction is stirred overnight. The volatiles are removed under reduced pressure to afford a crude material, which could be further purified by vacuum distillation or re-crystallization from an appropriate solvent.

**Table 6**

| **Starting materials and products** | |
|---|---|
| **Starting compound(s)** | **Product** |
| ethyl (4-bromophenyl)(methyl)phosphinat e | (4-bromophenyl)(methyl)phosphinic chloride |
| ethyl (3-bromophenyl)(methyl)phosphinat e | (3-bromophenyl)(methyl)phosphinic chloride |
| ethyl (4-bromophenyl)(ethyl)phosphinate | (4-bromophenyl)(ethyl)phosphinic chloride |
| ethyl (3-bromophenyl)(ethyl)phosphinate | (3-bromophenyl)(ethyl)phosphinic chloride |

### General Procedure for Alkyl (alkyl) phosphine oxides

A solution of phosphinic chloride (10 mmol) in anhydrous THF (10 ml) is slowly added to Grignard solution in THF (10,5 mmol) in THF or diethyl ether. The reaction mixture is stirred under reflux for 1 h, then cooled with an ice bath and quenched with saturated aqueous ammonium chloride solution. The mixture is poured into water, acidified with diluted hydrochloric acid, extracted with chloroform. The combined extracts were washed with saturated aqueous sodium hydrocarbonate solution, brine, dried over magnesium sulfate and concentrated in vacuum to give a crude product.

Further purification could be achieved by vacuum distillation or by re-crystallization from an appropriate solvent.

**Table 7**

| **Starting materials and products** | |
|---|---|
| **Starting compound(s)** | **Product** |
| (4-bromophenyl) (methyl)phosphinic chloride | 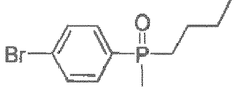 |
| (3-bromophenyl)(methyl)phosphinic chloride | 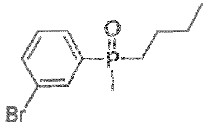 |

**Table 8**

| **HBL** | **ETL** | **CIEy** | **Voltage at 10 mA/cm² [V]** | **Ceff at 10 mA/cm² [cd/A]** | **Lifetime (LT97) at 10 mA/cm² [h]** |
|---|---|---|---|---|---|
| F3 | **B2:F4** | 0.101 | 3.30 | 6.81 | 40 |
| F3 | **E1:F4** | 0.101 | 3.23 | 6.87 | 41 |
| F3 | E2:F4 | | | | |
| F3 | E3:F4 | 0.101 | 3.24 | 7.13 | 73 |
| F3 | E4:F4 | 0.102 | 3.26 | 7.26 | 68 |
| | E5:F4 | | | | |
| | E6:F4 | | | | |
| -- | **B2:F4** | 0.104 | 3.43 | 5.86 | 77 |
| -- | **E1:F4** | 0.104 | 3.37 | 5.78 | 97 |
| -- | E2:F4 | | | | |
| | E3:F4 | 0.103 | 3.29 | 6.08 | 109 |
| | E4:F4 | 0.105 | 3.43 | 5.99 | 131 |
| -- | E5:F4 | | | | |
| -- | E6:F4 | | | | |

## Claims

1. Use of a compound represented by the general formula (I) 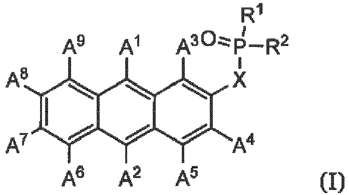 wherein
A¹ and A² are independently selected from C₁ to C₆₀ carbon-containing groups;
A³ to A⁹ are independently selected from hydrogen, C₁ to C₆₀ carbon-containing groups, or halogen;
R¹ and R² are independently selected from C₁ to C₆₀ carbon-containing groups which are attached to the phosphorous atom by a sp³-hybridized carbon atom;
X is a single covalent bond or a spacer group consisting of 1 to 120 covalently bound atoms;
in a semiconducting layer comprised in an electronic device;
provided that compounds having one of the following formulas 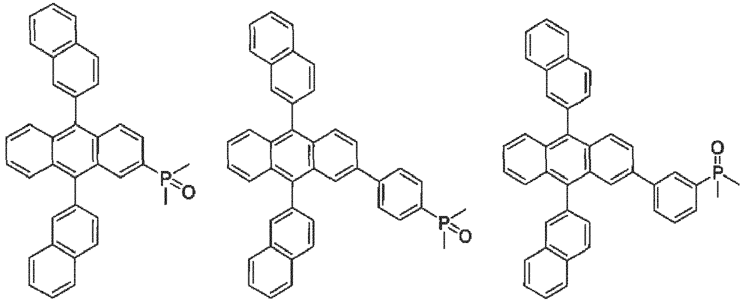 are excluded.

2. Use according to claim 1, wherein A¹ and A² are independently selected from aryl or heteroaryl.

3. Use according to claim 1 or 2, wherein A¹ and A² are independently selected from the group consisting of phenyl, biphenylyl, and naphthyl.

4. Use according to any of the preceding claims, wherein A³ to A⁹ are independently selected from the group consisting of hydrogen, hydrocarbyl, halogen, cyano, hydroxycarbyloxy, diarylamino, bis(heteroaryl)amino, or heteroaryl.

5. Use according to any of the preceding claims, wherein A³ to A⁹ are hydrogen.

6. Use according to any of the preceding claims, wherein R¹ and R² are independently selected from C₁ to C₁₆ alkyl.

7. Use according to any of the preceding claims, wherein R¹ and R² are methyl.

8. Use according to any of the preceding claims, wherein the spacer group is arylene or heteroarylene.

9. Use according to any of the preceding claims, wherein the spacer group is phenylene or oligophenylene.

10. Use according to any of the preceding claims, wherein the compound is selected from one or more of the following structures

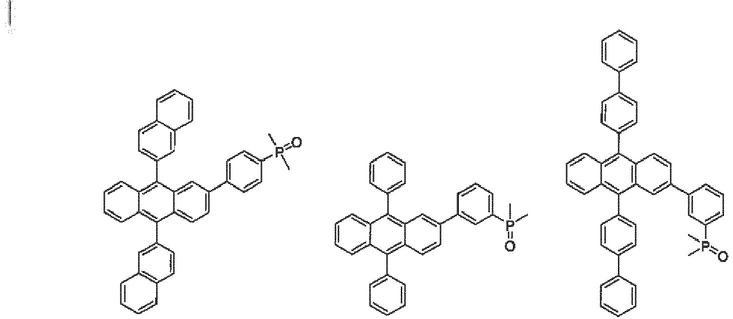

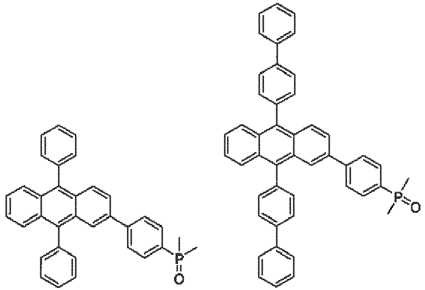

11. Use according to any of the preceding claims, wherein the electronic device is an organic light emitting diode.

12. Use according to claim 11, wherein the organic light emitting diode is a blue organic light emitting diode.

13. Semiconducting material comprising a compound as defined for the use according to any of the preceding claims.

14. Electronic device comprising a semiconducting material according to claim 13.

15. Compound according to formula (II) 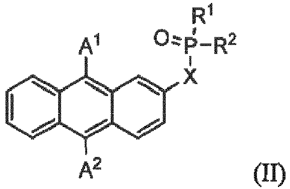 wherein,
A¹ and A² are independently selected from C₁ to C₆₀ carbon-containing groups;
R¹ and R² are independently selected from C₁ to C₆₀ carbon-containing groups which are attached to the phosphorous atom by a sp³-hybridized carbon atoms;
X is a single covalent bond or a spacer group consisting of 1 to 120 covalently bound atoms;
provided that compounds having one of the following formulas 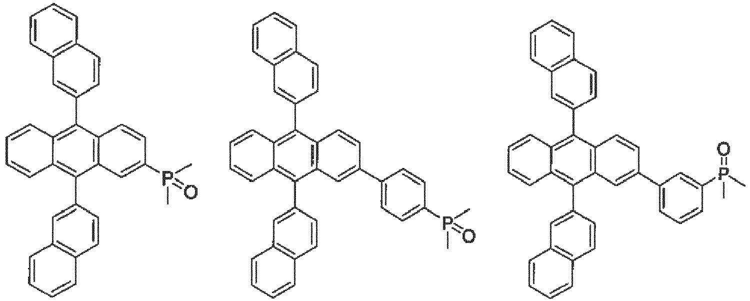 are excluded.

## Patentansprüche

1. Verwendung einer Verbindung, dargestellt durch die allgemeine Formel I 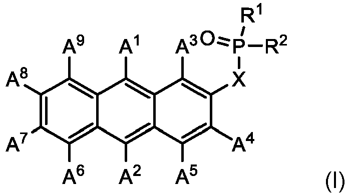 Wobei
A¹ und A² unabhängig ausgewählt sind aus C₁ bis C₆₀ Kohlenstoff-enthaltenden Gruppen;
A³ bis A⁹ unabhängig ausgewählt sind aus Wasserstoff, C₁ bis C₆₀ Kohlenstoffenthaltende Gruppen oder Halogen;
R¹ und R² unabhängig ausgewählt sind aus C₁ bis C₆₀ Kohlenstoff-enthaltenden Gruppen, die mit dem Phosphoratom durch ein sp³-hybridisiertes Kohlenstoffatom verbunden sind;
X eine kovalente Einfachbindung oder eine Abstandshaltergruppe, die aus 1 bis 120 kovalent gebundenen Atomen besteht, ist;
in einer halbleitenden Schicht, die in einer elektronischen Vorrichtung umfasst ist;
vorausgesetzt, dass Verbindungen mit einer der folgenden Formel 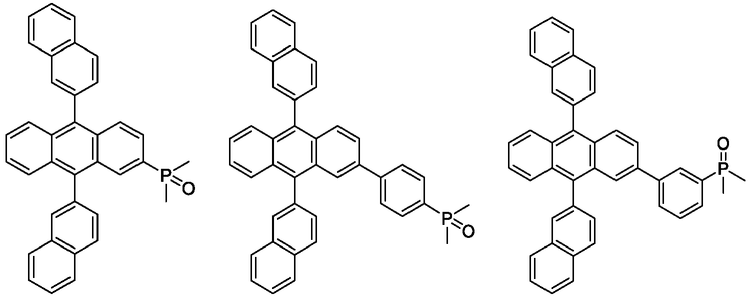 ausgeschlossen sind.

2. Verwendung nach Anspruch 1, wobei A¹ und A² unabhängig ausgewählt sind aus Aryl oder Heteroaryl.

3. Verwendung nach Anspruch 1 oder 2, wobei A¹ und A² unabhängig ausgewählt sind aus der Gruppe, bestehend aus Phenyl, Biphenyl und Naphthyl.

4. Verwendung nach einem der vorangehenden Ansprüche, wobei A³ bis A⁹ unabhängig ausgewählt sind aus der Gruppe, bestehend aus Wasserstoff, Hydrocarbyl, Halogen, Cyano, Hydroxycarbyloxy, Diarylamino, Bis(Heteroaryl)amino, oder Heteroaryl.

5. Verwendung nach einem der vorangehenden Ansprüche, wobei A³ bis A⁹ Wasserstoff sind.

6. Verwendung nach einem der vorangehenden Ansprüche, wobei R¹ und R² unabhängig aus C₁ bis C₁₆ Alkyl ausgewählt sind.

7. Verwendung nach einem der vorangehenden Ansprüche, wobei R¹ und R² Methyl sind.

8. Verwendung nach einem der vorangehenden Ansprüche, wobei die Abstandshaltergruppe Arylen oder Heteroarylen ist.

9. Verwendung nach einem der vorangehenden Ansprüche, wobei die Abstandshaltergruppe Phenylen oder Oligophenylen ist.

10. Verwendung nach einem der vorangehenden Ansprüche, wobei die Verbindung ausgewählt ist aus einer oder mehreren der folgenden Strukturen

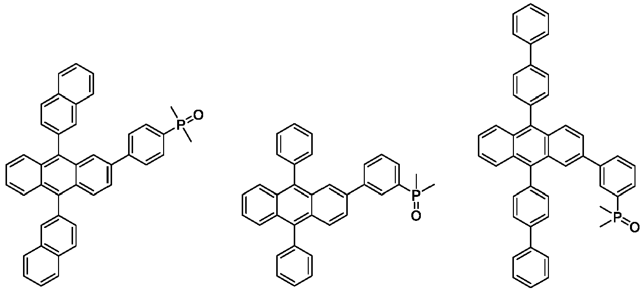

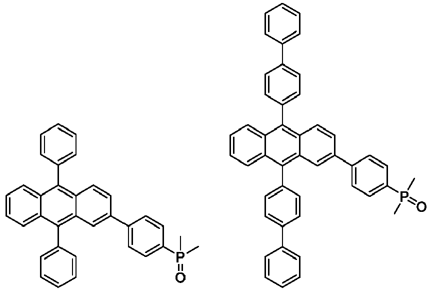

11. Verwendung nach einem der vorangehenden Ansprüche, wobei die elektronische Vorrichtung eine organische lichtemittierende Diode ist.

12. Verwendung nach Anspruch 11, wobei die organische lichtemittierende Diode eine blaue organische lichtemittierende Diode ist.

13. Halbleitendes Material, umfassend eine Verbindung wie hinsichtlich der Verwendung nach einem der vorangehenden Ansprüche definiert.

14. Elektronische Vorrichtung, umfassend ein halbleitendes Material nach Anspruch 13.

15. Verbindung der Formel (II) 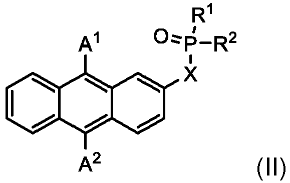 wobei
A¹ und A² unabhängig ausgewählt sind aus C₁ bis C₆₀ Kohlenstoff-enthaltenden Gruppen;
R¹ und R² unabhängig ausgewählt sind aus C₁ bis C₆₀ Kohlenstoff-enthaltenden Gruppen, die mit dem Phosphoratom durch ein sp³-hybridisiertes Kohlenstoffatom verbunden sind;
X eine kovalente Einfachbindung oder eine Abstandshaltergruppe, die aus 1 bis 120 kovalent gebundenen Kohlenstoffatomen besteht, ist;
vorausgesetzt, dass Verbindungen mit einer der folgenden Formeln 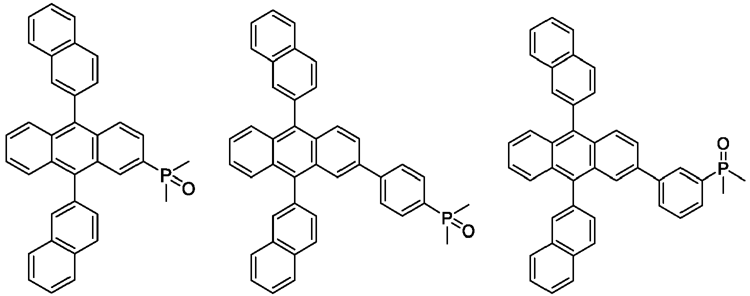 ausgeschlossen sind.

## Revendications

1. Utilisation d'un composé représenté par la formule générale (I) 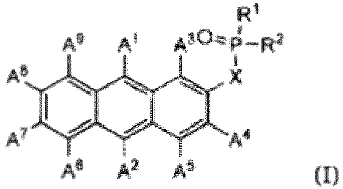 dans laquelle
A¹ et A² sont choisis indépendamment parmi des groupes contenant du carbone en C₁ à C₆₀ ;
A³ à A⁹ sont choisis indépendamment parmi un atome d'hydrogène, des groupes contenant du carbone en C₁ à C₆₀ ou un atome d'halogène ;
R¹ et R² sont choisis indépendamment parmi des groupes contenant du carbone en C₁ à C₆₀ qui sont attachés à l'atome de phosphore par un atome de carbone à hybridation sp³ ;
X est une simple liaison covalente ou un groupe espaceur constitué de 1 à 120 atomes liés de manière covalente ;
dans une couche semiconductrice comprise dans un dispositif électronique ;
pourvu que les composés ayant une des formules suivantes 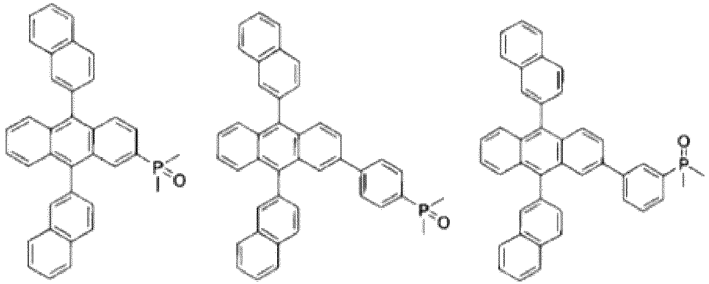 soient exclus.

2. Utilisation selon la revendication 1, dans laquelle A¹ et A² sont choisis indépendamment parmi des groupes aryle ou hétéroaryle.

3. Utilisation selon la revendication 1 ou 2, dans laquelle A¹ et A² sont choisis indépendamment dans le groupe constitué par les groupes phényle, biphénylyle et naphtyle.

4. Utilisation selon l'une quelconque des revendications précédentes, dans laquelle A³ à A⁹ sont choisis indépendamment dans le groupe constitué par un atome d'hydrogène, des groupes hydrocarbyle, halogène, cyano, hydroxycarbyloxy, diarylamino, bis(hétéroaryl)amino ou hétéroaryle.

5. Utilisation selon l'une quelconque des revendications précédentes, dans laquelle A³ à A⁹ sont un atome d'hydrogène.

6. Utilisation selon l'une quelconque des revendications précédentes, dans laquelle R¹ et R² sont choisis indépendamment parmi un groupe alkyle en C₁ à C₁₆.

7. Utilisation selon l'une quelconque des revendications précédentes, dans laquelle R¹ et R² sont le groupe méthyle.

8. Utilisation selon l'une quelconque des revendications précédentes, dans laquelle le groupe espaceur est un groupe arylène ou hétéroarylène.

9. Utilisation selon l'une quelconque des revendications précédentes, dans laquelle le groupe espaceur est un groupe phénylène ou oligophénylène.

10. Utilisation selon l'une quelconque des revendications précédentes, dans laquelle le composé est choisi parmi une ou plusieurs des structures suivantes

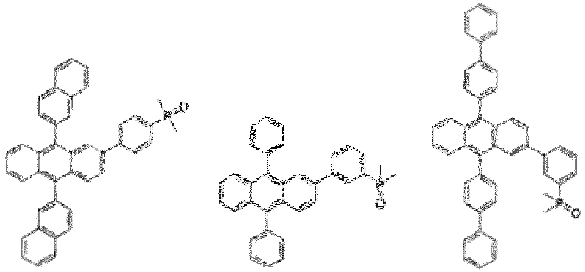

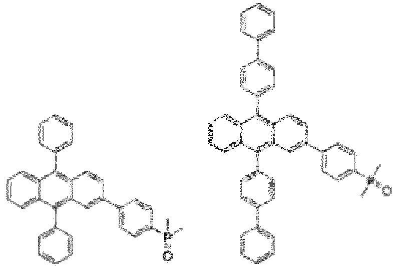

11. Utilisation selon l'une quelconque des revendications précédentes, dans laquelle le dispositif électronique est une diode électroluminescente organique.

12. Utilisation selon la revendication 11, dans laquelle la diode électroluminescente organique est une diode électroluminescente organique bleue.

13. Matériau semiconducteur comprenant un composé tel que défini pour l'utilisation selon l'une quelconque des revendications précédentes.

14. Dispositif électronique comprenant un matériau semiconducteur selon la revendication 13.

15. Composé selon la formule (II) 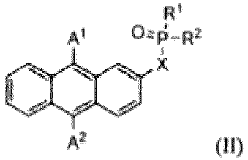 dans laquelle,
A¹ et A² sont choisis indépendamment parmi des groupes contenant du carbone en C₁ à C₆₀ ;
R¹ et R² sont choisis indépendamment parmi des groupes contenant du carbone en C₁ à C₆₀ qui sont attachés à l'atome de phosphore par un atomes de carbone à hybridation sp³ ;
X est une simple liaison covalente ou un groupe espaceur constitué de 1 à 120 atomes liés de manière covalente ;
pourvu que les composés ayant une des formules suivantes 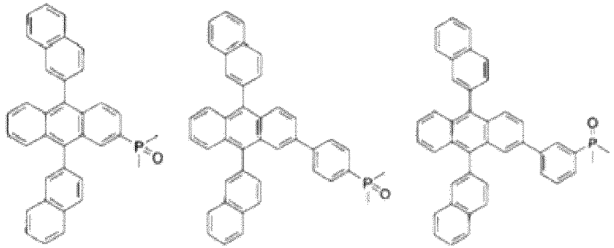 soient exclus.
